# EUROPEAN PATENT APPLICATION

(11) **EP 4 472 254 A1**
(43) Date of publication of application: **04.12.2024**
(21) Application number: 23763688.1
(22) Date of filing: 28.02.2023
(51) Int. Cl.: H04W 8/18, H04L 67/306, H04W 12/06, H04W 60/00, H04W 88/02, H04W 8/20, H04L 67/303, H04L 67/00, H04L 67/75, H04L 101/654

(54) **ELECTRONIC DEVICE FOR SUPPORTING REUSE OF PROFILE OF EMBEDDED SUBSCRIBER IDENTITY MODULE AND OPERATION METHOD THEREOF**

(30) Priority: 04.03.2022 KR 20220028331; 20.05.2022 KR 20220062335; 26.07.2022 KR 20220092723; 06.09.2022 KR 20220112999
(71) Applicant: Samsung Electronics Co., Ltd., Gyeonggi-do, 16677 (KR)
(72) Inventor: JUNG, Jieun, Suwon-si Gyeonggi-do 16677 (KR); BAN, Hyongjin, Suwon-si Gyeonggi-do 16677 (KR); SEO, Jaehyeon, Suwon-si Gyeonggi-do 16677 (KR)
(74) Representative: Nederlandsch Octrooibureau
(86) International application number: PCT/KR2023/002813
(87) International publication number: WO 2023/167489

(57) **Abstract**

According to various embodiments, an electronic device comprises an embedded universal integrated circuit card (eUICC) and at least one processor electrically connected to the eUICC. The at least one processor can be configured to: on the basis of confirming at least one user input that causes a first profile stored in the eUICC to be transferred to an external electronic device, transmit a first message requesting the transfer of the first profile to the external electronic device; delete the first profile corresponding to the first message on the basis of receiving a second message requesting deletion of the first profile; transmit, to an SM-DP+ server, a third message indicating the deletion of the first profile; receive, from an entitlement server, a fourth message indicating that preparation of the first profile has been completed in the SM-DP+ server that has received the third message; transmit a fifth message for requesting download information to the entitlement server on the basis of the fourth message; receive, from the entitlement server, a sixth message including the download information corresponding to the fifth message; and provide the download information confirmed on the basis of the sixth message. Various other embodiments are possible.

## Description

### [Technical Field]

Various embodiments relate to an electronic device supporting transfer of a profile of an embedded subscriber identity module (SIM) and a method for operating the same.

### [Background Art]

In a wireless communication system, an electronic device (e.g., user equipment (UE)) may connect to a wireless communication network and use voice or data communication services at a fixed location or while moving. To provide communication services to the electronic device, an appropriate authentication process is required. Typically, a universal integrated circuit card (UICC) is inserted into the electronic device, and authentication is performed between the electronic device and a mobile network operator (MNO) server via a universal subscriber identity module (USIM) installed inside the UICC. The UICC may be referred to as a subscriber identity module (SIM) card in global system for mobile communications (GSM), and a USIM card in wideband code division multiple access (WCDMA), long term evolution (LTE), or new radio (NR).

When a user of an electronic device subscribes to a wireless communication service provided by an MNO, the MNO provides the user with a UICC (e.g., a SIM card or USIM card), and the user may insert the provided UICC into the electronic device. When the UICC is inserted into the electronic device, a USIM application installed inside the UICC may be executed to perform an appropriate authentication process with an MNO server where the same values are stored, using an international mobile subscriber identity (IMSI) value and a secret key value for authentication stored inside the UICC. After the appropriate authentication process is performed, the wireless communication service may be used.

A UICC may be manufactured as a dedicated card for a specific MNO at the request of the MNO during the manufacturing, and preloaded with authentication information (e.g., a USIM application and a subscriber ID (e.g., IMSI)) and a secret key (e.g., a known K value or Ki value) for accessing the MNO's network. The UICC is provided to a subscriber of the communication service through the MNO, and the MNO may then manage the application, such as installation, modification, and deletion of the application, in the UICC, using a technology such as over the air (OTA), as needed. The user may use the network and application services of the MNO by inserting the UICC into the device. When replacing the terminal, the user may use authentication information, a phone number, a personal phonebook, and so on stored in the UICC on a new device by inserting the removable UICC from the old terminal to the new terminal.

Techniques are proposed, which remotely install a USIM application of an MNO, a subscriber ID, an encryption key, and the like on a UICC, unlike UCCs manufactured and distributed exclusively for a specific MNO, and enable secure and flexible installation and management of authentication information of various MNOs, as a user subscribes to (or purchases) communication services after purchasing or obtaining a specific UICC, subscribes to and unsubscribes from a specific MNO, and opens or changes subscription to another MNO (e.g., subscription transfer).

For example, a so-called embedded UICC (eUICC) has been proposed, which allows a user to remotely install a profile for providing a communication service over a network without replacing a UICC even if the user changes an MNO. The eUICC may be manufactured as a pre-embedded UICC, which is fixed in the form of a chip in a terminal during a manufacturing process of the terminal. Therefore, the eUICC may be used in various terminals which may have a structure in which a UICC is not easily removed physically, such as machine to machine (M2M) or device to device (D2D) terminals, as well as general wireless terminals such as mobile phones. The eUICC may also be referred to as an eSIM.

### [Detailed Description of the Invention]

### [Technical Problem]

In the case of electronic devices based on physical SIM cards, a user may remove a physical SIM from one electronic device and insert the physical SIM into another electronic device. Accordingly, the subscription of the SIM may be transferred to the other electronic device. A method for transferring subscription while reusing a profile is yet to be disclosed.

An electronic device and a method for operating the same according to various embodiments may delete a stored profile and provide download information for the profile based on receipt of a profile delete command, in order to transfer the profile to another electronic device. An electronic device and a method for operating the same according to various embodiments may perform an operation for inducing deletion based on receipt of a profile delete command and then receive download information, in order to receive a profile stored in another electronic device.

### [Technical Solution]

According to various embodiments, an electronic device includes an embedded universal integrated circuit card (eUICC) and at least one processor electrically connected to the eUICC. The at least one processor is configured to, based on identifying at least one user input causing transfer of a first profile stored in the eUICC to an external electronic device, transmit a first message requesting the transfer of the first profile to the external electronic device, based on receiving a second message requesting deletion of the first profile corresponding to the first message, delete the first profile, transmit a third message indicating the deletion of the first profile to an SM-DP+ server, receive, from an entitlement server, a fourth message indicating that the first profile is completely ready in the SM-DP+ server receiving the third message, transmit a fifth message requesting profile download information to the entitlement server, based on the fourth message, receive a sixth message including the download information corresponding to the fifth message from the entitlement server, and provide the download information identified based on the sixth message.

According to various embodiments, a method for operating a server includes receiving a first message requesting a new profile with a specific ICCID from an entitlement server, transmitting a second message requesting the new profile with the specific ICCID to an SM-DP+ server, based on the reception of the first message, receiving a third message indicating that the specific ICCID is in use from the SM-DP+ server after transmitting the second message, and transmitting a fourth message requesting deletion of the profile with the specific ICCID to the entitlement server, based on the reception of the third message.

According to various embodiments, a method for operating an entitlement server includes receiving a first message requesting transfer of a profile from an electronic device, transmitting a second message requesting a new profile with a specific ICCID to a BSS/OSS, based on the first message, receiving a third message indicating that deletion of the profile with the specific ICCID is requested, and transmitting a fourth message indicating that the deletion of the profile with the specific ICCID is requested to the electronic device, based on the reception of the third message.

According to various embodiments, an electronic device includes an eUICC and at least one processor electrically connected to the eUICC. The at least one processor is configured to, based on identifying at least one user input causing transfer of a first profile stored in an external electronic device to the electronic device, transmit a first message requesting the transfer of the first profile to the electronic device, based on receiving a second message requesting deletion of the first profile corresponding to the first message, perform an operation related to inducing the deletion of the first profile, receive a third message indicating that the first profile is completely ready in an SM-DP+ server from an entitlement server, transmit a fourth message requesting download information to the entitlement server, based on the third message, receive a fifth message including the download information corresponding to the fourth message from the entitlement server, obtain the first profile from the SM-SP+ server, based on the download information identified based on the fifth message, install the first profile in the eUICC, and enable the first profile.

### [Advantageous Effects]

According to various embodiments, an electronic device and a method for operating the same may be provided, which may delete a stored profile based on receipt of a profile delete command and provide download information for the profile in order to transfer the profile to an external electronic device. The external electronic device may obtain the download information and download the profile, thereby reusing the profile.

According to various embodiments, an operation for inducing deletion may be performed based on receipt of a profile delete command, and then download information may be received, in order to receive a profile stored in an external electronic device. The external electronic device may delete the existing profile, thereby allowing reuse of the profile.

### [Brief Description of Drawings]

FIG. 1A is a block diagram illustrating an electronic device in a network environment according to various embodiments.
FIG. 1B is a diagram illustrating a network environment including an electronic device according to various embodiments.
FIG. 2 is a diagram illustrating a system for providing a profile-based communication connection to an electronic device according to various embodiments.
FIG. 3 is a block diagram illustrating the configuration of an electronic device according to various embodiments.
FIG. 4 is a diagram illustrating the internal structure of an eUICC according to various embodiments.
FIG. 5 is a block diagram illustrating a network system for profile download according to various embodiments.
FIG. 6 is a flowchart illustrating a profile download method according to various embodiments.
FIG. 7 is a flowchart illustrating a method for operating an electronic device according to various embodiments.
FIGS. 8A and 8B are flowcharts illustrating a method for operating an electronic device and/or at least one entity of a mobile network operator MNO server according to various embodiments.
FIG. 9 is a flowchart illustrating a method for operating an MNO server according to various embodiments.
FIGS. 10A, 10B, 10C, 10D, 10E, 10F, and 10G are diagrams illustrating screens displayed on an electronic device according to various embodiments.
FIG. 11 is a flowchart illustrating a method for operating an electronic device and/or at least one entity of an MNO server according to various embodiments.
FIGS. 12A and 12B are flowcharts illustrating a method for operating an electronic device and/or at least one entity of an MNO server according to various embodiments.
FIGS. 13A, 13B, 13C, 13D, 13E, 13F, and 13G are diagrams illustrating screens displayed on an electronic device according to various embodiments.
FIG. 14 is a flowchart illustrating a method for operating an electronic device and/or at least one entity of an MNO server according to various embodiments.
FIG. 15 is a flowchart illustrating a method for operating an electronic device and/or at least one entity of an MNO server according to an embodiment.
FIG. 16A is a flowchart illustrating a method for operating an electronic device according to various embodiments.
FIG. 16B is a diagram illustrating a screen displayed on an electronic device according to various embodiments.
FIG. 17 is a flowchart illustrating a method for operating an electronic device and/or at least one entity of an MNO server according to various embodiments.
FIG. 18A is a flowchart illustrating a method for operating an external electronic device according to various embodiments.
FIG. 18B is a diagram illustrating a screen displayed on an external electronic device according to various embodiments.
FIG. 19 is a flowchart illustrating a method for operating an electronic device and/or at least one entity of an MNO server according to various embodiments.

### [Mode for Carrying out the Invention]

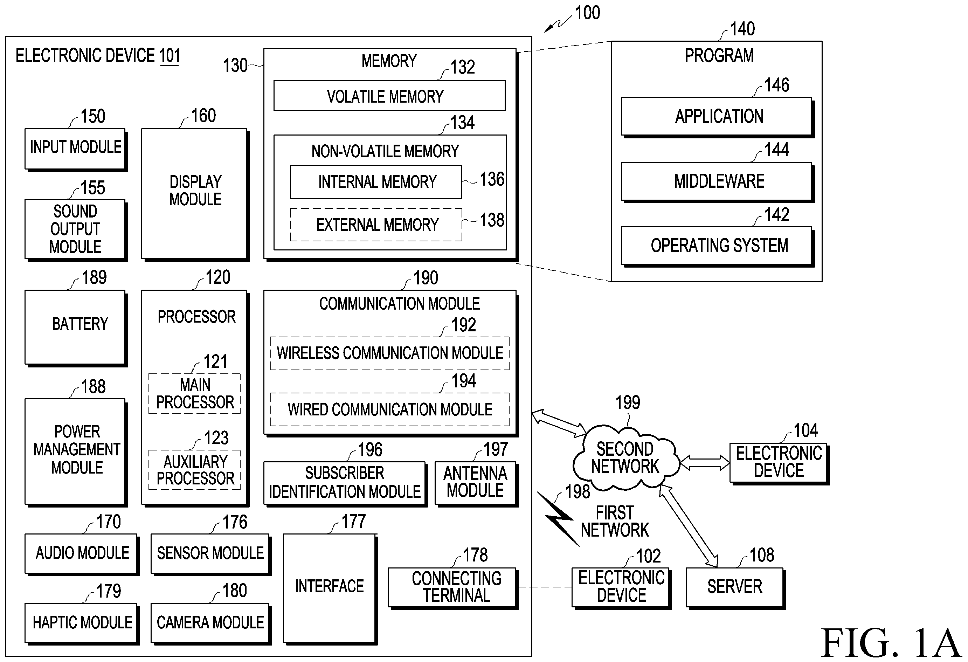

FIG. 1A is a block diagram illustrating an electronic device 101 in a network environment 100 according to various embodiments. Referring to FIG. 1A, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

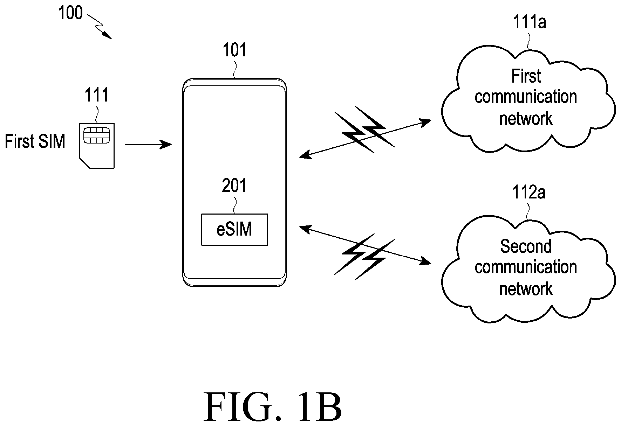

FIG. 1B is a diagram illustrating the network environment 100 including an electronic device according to various embodiments. Referring to FIG. 1B, the network according to various embodiments of the disclosure may include the electronic device 101, a first communication network 111a, and/or a second communication network 112a.

According to various embodiments, the electronic device 101 may operate as a dual SIM dual standby (DSDS) or dual SIM dual active (DSDA) electronic device that supports two SIMs in one device. For example, the electronic device 101 may include a first SIM 111 and an embedded subscriber identity module (eSIM) 201. The first SIM 111 may be an rSIM. For example, the electronic device 101 may be equipped with a SIM card. Hereinafter, for convenience of description, a SIM card will be referred to as a SIM. The electronic device 101 may include a slot (not shown) to accommodate the first SIM 111 therein. According to an embodiment, although not shown, the electronic device 101 may accommodate two or more SIMs. In this case, the electronic device 101 may include a plurality of slots to accommodate a plurality of SIMs therein.

For example, the first SIM 111 is a SIM subscribed to a mobile network operator (MNO) of the first communication network 111a, and the electronic device 101 may connect to the first communication network 111a using the first SIM 111 to receive a wireless communication service. According to various embodiments, the electronic device 101 may include the eSIM 201. An eSIM may also be referred to as an eUICC. The electronic device 101 may receive a wireless communication service by connecting to the second communication network 112a using the eSIM 201. The first communication network 111a and the second communication network 112a may be provided by the same MNO or different MNOs.

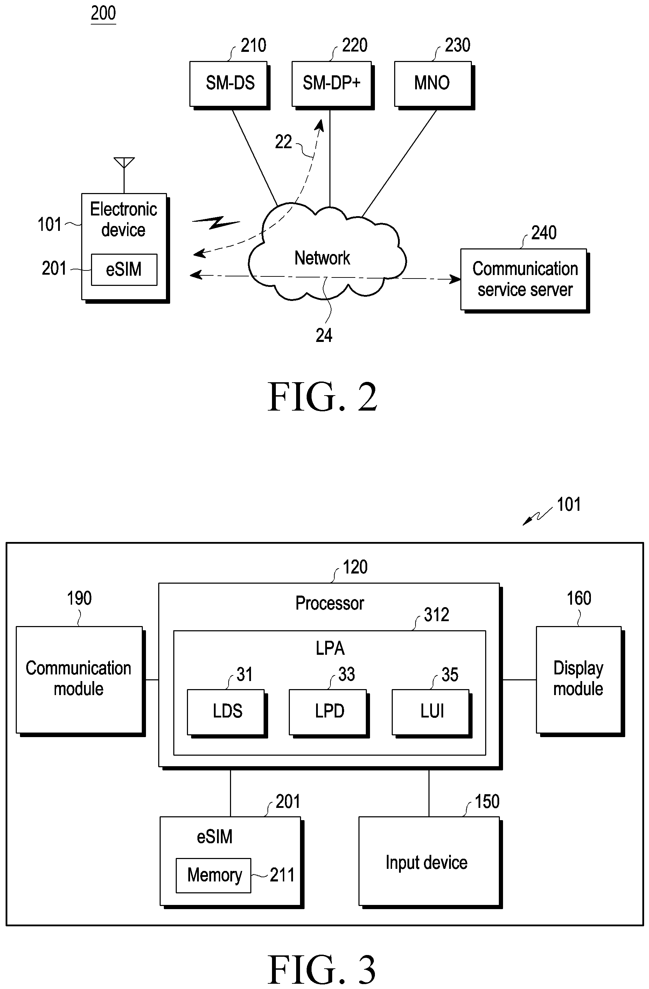

FIG. 2 is a diagram illustrating a system for providing a profile-based communication connection to an electronic device according to various embodiments.

Referring to FIG. 2, a system 200 according to various embodiments may include the electronic device 101, a subscription manager discovery service (SM-DS) server 210, a subscription manager data preparation plus (SM-DP+) server 220, an MNO server 230, and a communication service server 240.

According to various embodiments, the electronic device 101 (e.g., the electronic device 101 in FIG. 1B) may include the eSIM 201. Although not shown for convenience of description, the electronic device 101 may include at least one slot which may accommodate at least one rSIM therein. According to various embodiments, the electronic device 101 may include or accommodate N SIMs (eSIMs or rSIMs) (N is a natural number), and perform switching to use some of them. The combination of N SIMs is not limited, and the number of N SIMs is not limited either.

According to various embodiments, the eSIM 201 may be inserted into the electronic device 101, provided integrally with the electronic device 101, or implemented to be accessible to the electronic device 101. According to various embodiments, the eSIM 201 may enable the electronic device 101 to perform authentication with an MNO server using information (e.g., a profile including universal subscriber identity module (USIM) information) included in the eSIM 201. According to an embodiment, the eSIM 201 may be called a SIM card in global system for mobile communications (GSM) or a USIM card in wideband code division multiple access (WCDMA), long term evolution (LTE), or new radio (NR). The eSIM 201 may also be called by various names depending on communication schemes. For example, when the user of the electronic device 101 subscribes to a wireless communication service provided by an MNO, the electronic device 101 may use the wireless communication service after performing an appropriate authentication process with an MNO server storing the same values, using information in the eSIM 201, for example, an international mobile subscriber identity (IMSI) value and a K value which is an encryption key for authentication. For example, the appropriate authentication process may be authentication and key agreement (AKA) authentication, and other authentication schemes may also be available.

According to various embodiments, the eSIM 201 may be manufactured as a dedicated card for a specific MNO at the request of the MNO, and preloaded with authentication information (e.g., a USIM application and a subscriber ID (e.g., an IMSI)) and an encryption key (e.g., a known K value or Ki value), for access to the network of the MNO. The application (or information) in the eSIM 201 may be installed, modified, deleted, or updated using a technology such as over the air (OTA) when needed.

According to various embodiments, the eSIM 201 may download and/or store information for providing a communication service in the form of a profile. According to an embodiment, the profile may be installed or stored during a manufacturing process of the eSIM 201, or may be downloaded in an OTA manner and installed or stored on the eSIM 201 by a terminal. For example, the profile may include a provisioning profile and an operational profile. Even if the provisioning profile is not installed, the electronic device 101 may download the operational profile through a short-range Wi-Fi connection or an Internet connection, and it will be understood by those skilled in the art that the provisioning profile is not necessarily installed in the electronic device 101. For example, the operational profile may be a profile including subscriber identification information of the user of the electronic device, and the provisioning profile may include information (hereinafter, referred to as "first information") for downloading subscriber identification information or a profile (hereinafter, referred to as a "first operational profile") including the subscriber identification information by the electronic device. The electronic device may download the first operational profile based on the first information in the provisioning profile in the eSIM 201.

According to various embodiments, the electronic device 101 may receive a communication service using subscriber identification information (hereinafter, also referred to as "second subscriber identification information") of the operational profile (hereinafter, also referred to as "second operational profile") installed or stored in the eSIM 201. For example, the profile including the subscriber identification information may be a SIM profile.

According to an embodiment, the operational profile may further include, in addition to the subscriber identification information, network connection authentication information of the subscriber, a phone book of the subscriber, personal information (e.g., SMS) about the subscriber, the name of a subscribed MNO, available services, the amount of available data, a rate or service provision speed, or information that enables safe wireless communication by performing subscriber authentication and generating a traffic security key when connecting to a wireless communication network such as GSM, WCDMA, LTE, or NR.

According to various embodiments, the first information for downloading data (e.g., the first operational profile) including the first subscriber identification information may include communication session information for a first communication connection specified for downloading the first operational profile. For example, the communication session information may include connection information about the SM-DS server 210, for downloading the first operational profile, or available MNO network information for connection to the SM-DS server 210.

According to various embodiments, the SM-DS server 210 may provide the electronic device 101 with an address of the SM-DP+ server 220 from which the first operational profile may be downloaded based on the provisioning profile.

According to various embodiments, the SM-DP+ server 220 may be a profile providing server, an off-card entity of a profile domain, a profile encryption server, a profile creation server, a profile provisioner, or a profile provider. The SM-DP+ server 220 may establish a first communication connection 22 with the electronic device 101 through a wireless communication network based on a first communication connection request based on the provisioning profile from the electronic device 101, and provide the first operational profile to the electronic device 101 through the first communication connection 22. According to various embodiments, the wireless communication network may be a specific node of the wireless communication network. For example, the wireless communication network may be a base station (BS), a subscriber information management node, or a mobility management node of the wireless communication network. According to an embodiment, the wireless communication network may include a home location register (HLR) and/or an authentication function (AuC) server, to which the electronic device 101 is connected to perform an authentication function, and may be connected to the communication service server 240 that may provide communication services such as voice communication or data communication, after authentication.

According to various embodiments, the MNO server 230 may be a server related to an MNO. According to various embodiments, the MNO server 230 may request the SM-DP+ server 220 to prepare at least one profile (or profile package) (e.g., the first operational profile) related to at least one piece of subscriber identification information (e.g., the first subscriber identification information), and transmit information related to the first operational profile to the SM-DP+ server 220. According to an embodiment, the MNO server 230 may transmit a signal for updating and managing the first operational profile to the SM-DP+ server 220. The MNO server 230 may allow a second communication connection 24 between the electronic device 101 and the communication service server 240 through the second operational profile installed in the eSIM 201 of the electronic device 101.

According to various embodiments, the communication service server 240 may be a server that provides a communication service. According to various embodiments, the communication service may be a service related to transmission or reception of data through a wireless communication network. According to an embodiment, the communication service may include a service related to transmission or reception of other profiles (or data) that do not include subscriber identification information, in addition to downloading an operational profile (e.g., the first operational profile including the first subscriber identification information). For example, the communication service server 240 may include a service server related to various data transmission and reception, such as a server related to each of various applications, a push server, a search server, or a market server, and the communication service provided by the communication service server 240 may include various services such as data transmission and reception by an application, notification reception, push message reception, link reception and connection, or a service request.

According to various embodiments, the electronic device 101 may establish the second communication connection 24 with the communication service server 240 based on the second operational profile, upon a service request related to transmission or reception of a profile (or data) that does not include subscriber identification information.

According to various embodiments, the SM-DS server 210, the SM-DP+ server 220, the MNO server 230, and the communication services server 240 are described merely as an implementation example of servers for performing respective functions, and may be called by other names. Each of the SM-DS server 210, the SM-DP+ server 220, the MNO server 230, and the communication service server 240 may include one or more servers. Some or all of the SM-DS server 210, the SM-DP+ server 220, the MNO server 230, and the communication service server 240 may be configured as a single integrated server.

FIG. 3 is a block diagram illustrating the configuration of an electronic device according to various embodiments.

Referring to FIG. 3, the electronic device 101 of FIG. 1A or FIG. 1B or the electronic device 101 of FIG. 2 according to various embodiments may include the processor 120, the eSIM 201, the communication module 190, the display module 160, and the input module 150. Although not shown for convenience of description, the electronic device 101 may include two or more slots to accommodate two or more rSIMs therein.

According to various embodiments, the processor 120 (e.g., the processor 120 in FIG. 1A) may include one or more processors (e.g., the main processor 121 and the auxiliary processor 123 in FIG. 1A, or an application processor and a communication processor), and include a local profile assistant (LPA) 312 (e.g., LPAd(device)) according to an embodiment. According to various embodiments, when the processor 120 includes a plurality of processors, some of the plurality of processors may include a portion of the LPA 312, and other processors may include another portion of the LPA 312. According to various embodiments, the LPA 312 may be included in the eSIM 201, and in this case, the LPA 312 may be referred to as an LPAe (eUICC).

According to various embodiments, the LPA 312 may perform an operation to communicate with a server to support profile download, installation, and management operations of the eSIM 201, or perform an operation to provide a user interface required for the profile download, installation, and management operations. The LPA 312 may be a module that provides local discovery services (LDS) 31, local profile download (LPD) 33, and a local user interface (LUI) 35 in the electronic device 101.

According to various embodiments, the LDS 31 may perform operations for communicating with the SM-DS server 210 and receiving the address of the SM-DP+ server 220 from which an operational profile may be downloaded based on a provisioning profile from the SM-DS server 210.

According to various embodiments, the LPD 33 may perform an operation for establishing the first communication connection 22 with the SM-DP+ server 220 over the wireless communication network based on the address of the SM-DP+ server 220, and receiving the first operational profile from the SM-DP+ server 220 via the first communication connection 22. According to various embodiments, the LPD 33 may support a network-initiated profile download, enable, disable, delete, or profile policy rule (PPR) download operation, or may support a profile enable, disable, delete, or eUICC reset operation of the electronic device.

According to various embodiments, the LUI 35 may perform an operation for providing various user interfaces (UIs) during the download of the operational profile. According to an embodiment, the LUI 35 may support data exchange between the LDS 31 and LPD 33 and the user, and include a UI for transmitting a user input to the LDS 31 or the LPD 33.

According to an embodiment, the processor 120 may perform a communication service based on information stored in the eSIM 201 by using (or executing) the LPA 312. For example, the processor 120 may establish the first communication connection with the SM-DP+ server 220 using the LPA 312 through the communication module 190 to download a profile (e.g., the first operational profile) including the first subscriber identification information based on the provisioning profile stored in the eSIM 201. Upon a request to transmit or receive a profile or data that does not include subscriber identification information during the first communication connection, the processor 120 may terminate the first communication connection using the LPA 312, and transmit or receive the profile or data that does not include the subscriber identification information by establishing the second communication connection based on the second subscriber identification information.

According to various embodiments, the eSIM 201 (e.g., the SIM 196 in FIG. 1A or the eSIM 201 in FIG. 2) may include one or more profiles as information for receiving a communication service. A profile may be a software package of at least one of an application, a file system, or an authentication key value stored in the eSIM 201. For example, the profile may include a provisioning profile and an operational profile. The operational profile may include subscriber identification information, and may further include, in addition to the subscriber identification information, network access authentication information of the subscriber, a phone book of the subscriber, personal information (e.g., SMS) about the subscriber, the name of a subscribed MNO, available services, the amount of available data, a rate or service provision speed, or information that enables safe wireless communication by performing subscriber authentication and generating a traffic security key, when accessing a wireless communication network such as GSM, WCDMA, LTE, NR, or the like. According to an embodiment, the operational profile may include a SIM profile. For example, the SIM profile may include a SIM file system (a master file (MF), a dedicated file (DF), and an elementary file (EF)), and a subscriber identification information (IMSI) value may be stored in the elementary file.

According to various embodiments, the provisioning profile may be a profile including first information for downloading a first operational profile in the electronic device. For example, the first information may include communication session information for a first communication connection specified for downloading the first operational profile. For example, the communication session information may include information for connecting to an SM-DS server (e.g., the SM-DS server 210 in FIG. 2), for downloading the first operational profile, and information about an MNO network available for connecting to the SM-DS server.

According to various embodiments, the communication module 190 (e.g., the communication module 190 in FIG. 1A) may perform first communication based on the provisioning profile or second communication based on the second operational profile. At least one screen related to the first communication based on the provisioning profile or the second communication based on the second operational profile may be displayed on the display module 160.

While the LPA 312 has been described as being included in the processor 120 according to an embodiment, at least some of the functions of the LPA 312 may be performed by the processor 120, or a separate LPA 312 may operate in conjunction with the processor 120. For example, the LPA 312 may be included in a program (e.g., the program 140 in FIG. 1A), and may be loaded on and executed by the processor 120. When the LPA 312 is loaded on and executed by the processor 120, it may be understood as an operation of the processor 120. According to various embodiments, the functional modules (e.g., the LDS 31, the LPD 33, or the LUI 35) included in the LPA 312 are separated by way of example, and may be represented as other functional modules without being limited to the embodiment. According to various embodiments, the LPA 312 may be included in the eSIM 201.

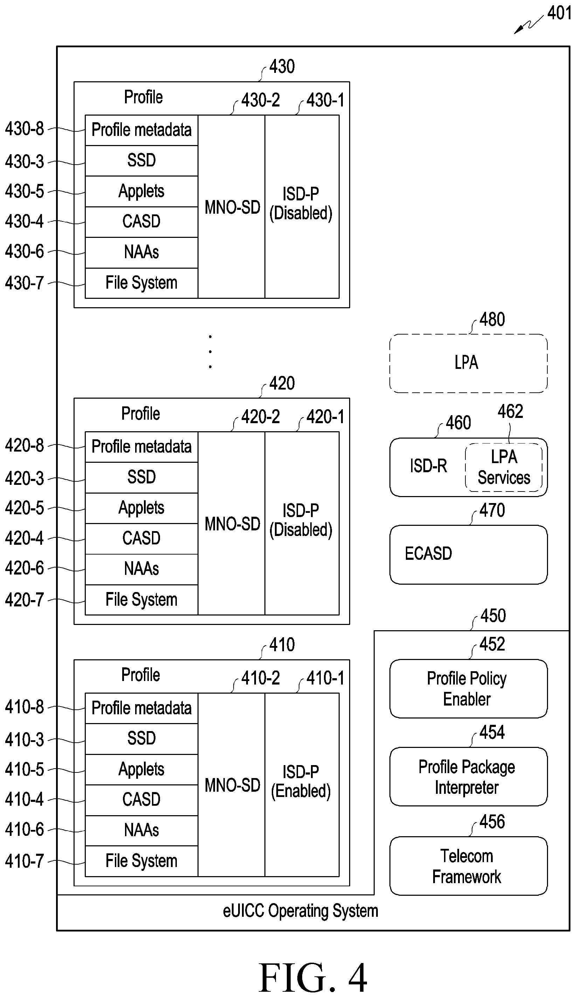

FIG. 4 is a diagram illustrating the internal structure of an eUICC according to various embodiments.

An eUICC 401 (e.g., the eSIM 201 in FIG. 2 or 3) according to an embodiment may be in the form of a card or a chip and have at least one profile 410, 420, and 430 in software installed thereon. According to various embodiments, each of the at least one profile 410, 420, and 430 may be a provisioning profile or an operational profile. The at least one profile 410, 420, and 430 may operate on an eUICC operating system (OS) 450. Each of the at least one profile 410, 420, and 430 may be enabled or disabled by a processor or an LPA (e.g., the LPA 312 in FIG. 3 or an LPA 480 in FIG. 4). Referring to FIG. 4, one profile 410 may be in the enabled state, while the remaining profiles 420 and 430 may be in the disabled state, according to an embodiment. According to various embodiments, two or more profiles may be in the enabled state.

According to various embodiments, the eUICC OS 450 of the eUICC 401 may include a profile policy enabler 452, a profile package interpreter 454, and a telecom framework 456. According to an embodiment, the profile policy enabler 452 may manage a profile policy rule (PPR) for each of the at least one profile 410, 420, and 430. According to an embodiment, the profile package interpreter 454 may unpack a profile package received from the SM-DP+ 220 into a form installable on the eUICC 401. According to an embodiment, the telecom framework 556 may perform a function related to communication of applications in the eUICC 401. According to various embodiments, the eUICC 401 may include an issuer security domain root (ISD-R) 460 and an eUICC controlling authority security domain (ECASD) 470. According to an embodiment, the ISD-R 460 may manage the at least one profile 410, 420, and 430 installed in the eUICC 401. For example, the ISD-R 460 may include LPA services 462, which may manage the at least one profile 410, 420, and 430 installed in the eUICC 401 by interfacing with the processor or the LPA (e.g., the LPA 312 in FIG. 3 or the LPA 480 in FIG. 4). According to an embodiment, the ECASD 470 may perform security processing for the at least one profile 410, 420, and 430 installed in the eUICC 401.

According to various embodiments, each of the at least one profile 410, 420, and 430 may include an ISD-P 410-1, 420-1, or 430-1, an MNO-SD 410-2, 420-2, or 430-2, a supplementary security domain (SSD) 410-3, 420-3, or 430-3, a controlling authority security domain (CASD) 410-4, 420-4, or 430-4, applets 410-5, 420-5, or 430-5, network access applications (NAAs) 410-6, 420-6, or 430-6, a file system 410-7, 420-7, or 430-7, or profile metadata 410-8, 420-8, or 430-8.

According to an embodiment, the ISD-P 410-1, 420-1, or 430-1 may include information for decoding and interpreting a profile package and be used for unpacking and installing a received profile package from the SM-DP+ 220 in cooperation with the profile package interpreter 454.

According to an embodiment, the MNO-SD 410-2, 420-2, or 430-2 may include an OTA key of an MNO, and include information for providing a secure OTA channel to communicate with the MNO.

According to an embodiment, the SSD 410-3, 420-3, or 430-3 and the CASD 410-4, 420-4, or 430-4 may include information for performing secure processing on the profile.

According to an embodiment, the applets 410-5, 420-5, or 430-5 may include various application information related to a user of a profile.

According to an embodiment, the NAAs 410-6, 420-6, or 430-6 may include application information that allows the profile to access a network.

According to an embodiment, the file system 410-7, 420-7, or 430-7 may include a file system related to each piece of information in the profile.

According to an embodiment, the profile metadata 410-8, 420-8, or 430-8, which may also be referred to as a profile record, may include metadata information about the profile in the form of text. The metadata information may include at least one of an integrated circuit card ID (ICCID) of the profile, a profile name, a profile-providing MNO name, a profile nickname of the user, an icon, a profile class, notification configuration information, profile owner information, or a PPR.

According to various embodiments, the ICCID of a profile may represent a unique ID of each profile as a profile ID. The profile name may include the name of each profile. The profile-providing MNO name may include the name of an MNO that provides the profile. The profile nickname of the user may include a profile nickname specified by the user. The icon may include an icon corresponding to the profile. The profile class may include information indicating whether the profile is a provisioning profile or an operational profile. The notification configuration information may include an address of a server (e.g., the SM-DP+ server 220) to receive a notification. The profile owner information may include a mobile country code (MCC), a mobile network code (MNC), and group identifier (GID) 1 or 2 information, which are related to a profile owner. For example, the MCC may be a code that identifies a country, and the MNC may be a code that identifies an MNO. GID 1 or 2 may be coded district information that identifies a group or district to which the profile belongs. The district information may include a group including a plurality of countries. The PPR may include policy rule information for managing the profile.

According to various embodiments, the electronic device 101 may identify whether each of the at least profile 410, 420, and 430 included in the eUICC 401 is a provisioning profile or an operational profile, using the profile class information in the profile metadata 410-8, 420-8, or 430-8, and enable or disable the provisioning profile or the operational profile through the LPA (the LPA 312 in FIG. 3 or the LPA 480 in FIG. 4).

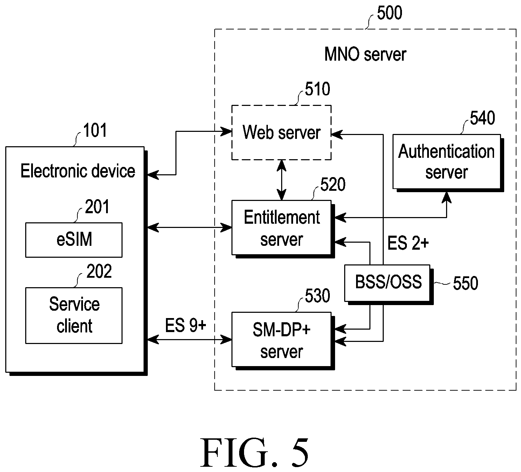

FIG. 5 is a block diagram illustrating a network system for profile download according to various embodiments. Referring to FIG. 5, the network system according to various embodiments may include the electronic device 101 and an MNO server 500. The MNO server 500 may include at least one of an entitlement server (or entitlement configuration server) 520, an SM-DP+ server 530, an authentication server 540, or a business support system (BSS)/operations support system (OSS) 550. According to various embodiments, the MNO server 500 may or may not include a web server 510. For example, at least one of the web server 510, the entitlement server 520, the SM-DP+ server 530, the authentication server 540, or the BSS/OSS 550 may be included in the MNO server 500 managed by an MNO. According to various embodiments, the web server 510 and the entitlement server 520 may be servers managed by the same MNO or different MNOs. According to various embodiments, the entitlement server 520 and the SM-DP+ server 530 may be servers managed by the same MNO or different MNOs. The eSIM 201 may be inserted into or embedded in the electronic device 101. A profile may be downloaded and installed in the eSIM 201. A service client 202 may be installed in the electronic device 101, for communication with the MNO server 500 according to later-described embodiments.

According to various embodiments, the electronic device 101 may be connected to the entitlement server 520, for example, by the service client 202, and access the web server 510 through the connected entitlement server 520. For example, when the electronic device 101 is connected to the entitlement server 520, the entitlement server 520 may authenticate the electronic device 101 or the user of the electronic device 101 through the BSS/OSS 550 or the authentication server 540, and perform an eligibility check. When determining that the electronic device 101 or the user of the electronic device 101 is properly authenticated and eligible, the entitlement server 520 may transmit access information about the web server 510 to the electronic device 101. The electronic device 101 may access the web server 510 using the access information about the web server 510 received through the entitlement server 520. According to various embodiments, the electronic device 101 may request subscription, opening, or subscription transfer through a web page provided by the web server 510, or according to another embodiment, through the entitlement server 520 without the web server 510. For example, when the MNO server 500 does not include the web server 510, or when the MNO server 500 includes the web server 510 but does not provide information related to the web server 510 (e.g., the address information about the web server 510) (e.g., when the MNO server 500 does not provide a web service or a web page through the web server), the electronic device 101 may request subscription, opening, or subscription transfer through the entitlement server 520. According to various embodiments, the web server 510 may provide a user interface (UI) or a web page for the entitlement server 520. For example, the electronic device 101 may request subscription, opening, or subscription transfer for a specific profile through the web page provided by the web server 510. According to various embodiments, the entitlement server 520 may manage and generate a communication line, control a service, and provide status information. For example, the entitlement server 520 may include an entitlement server or entitlement configuration server as disclosed in the GSMA standard document TS. 43. As used in the above standard document, the term entitlement may include the meaning of the applicability, availability, or status of a requested service prior to providing the service (e.g., a communication service) to the user of the electronic device 101. For example, the entitlement server 520 may function to transmit information (e.g., profile download information or profile download-related information) related to a profile provided to the electronic device 101. In the following description, the profile information may include information related to the profile, and will be referred to as profile download information or profile download-related information, for convenience of description. The entitlement server 520 may include, but is not limited to, a discovery and push function (DPF), a subscription manager discovery service (SM-DS), a subscription manager secure routing (SM-SR), a subscription manager secure routing plus (SM-SR+), an off-card entity of a eUICC profile manager or profile management credentials holder (PMC holder), or an eUICC manager (EM).

According to various embodiments, the SM-DP+ server 530 may perform the function of managing and downloading a profile. For example, in addition to SM-DP+, the SM-DP+ server 530 may further include, but is not limited to, at least one of subscription manager data preparation (SM-DP), an off-card entity of a profile domain, a profile encryption server, a profile creation server, a profile provisioner (PP), a profile provider, or a profile provisioning credentials holder (PPC holder).

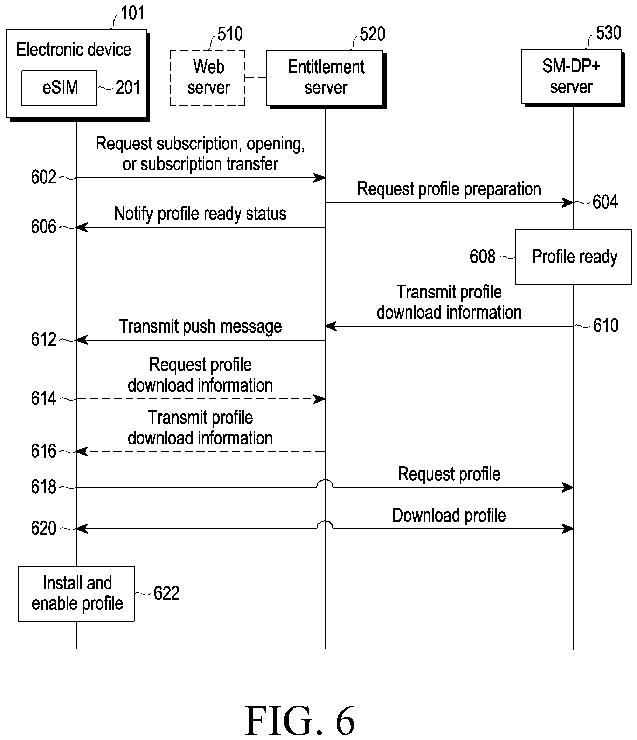

FIG. 6 is a flowchart illustrating a method for downloading a profile according to various embodiments. Referring to FIG. 6, according to various embodiments, the electronic device 101 (e.g., the processor 120) may access the web server 510 through the entitlement server 520. In operation 602, the electronic device 101 may request a new eSIM profile or request subscription, opening, or subscription transfer for a new communication service through a web page provided by the web server 510. For example, the electronic device 101 may transmit a message including a subscription-related action (e.g., subscription, opening, or subscription transfer) through the web page provided by the web server 510, and according to various embodiments, the transmission of the message including the subscription-related action may follow, but is not limited to, the procedure disclosed in the GSMA Standard Document TS. 43. For example, the electronic device 101 may request an eligibility check from the entitlement server 520 according to the procedure disclosed in the standard document TS. 43, and the entitlement server 520 may check whether the electronic device 101 is eligible by transmitting a profile query to another server (e.g., the BSS/OSS 550) within the MNO server 500 in response to the request. After completing the eligibility check, the entitlement server 520 may transmit a result of the check to the electronic device 101. The electronic device 101 may identify that the eligibility check has been successfully completed, and request the subscription-related action (e.g., subscription, opening, or subscription transfer) from the entitlement server 520. The entitlement server 520 may authenticate the electronic device 101 or the user of the electronic device 101 through the authentication server 540.

According to various embodiments, the entitlement server 520 may request profile preparation from the SM-DP+ server 530 in response to the request for the subscription-related action (e.g., subscription, opening, or subscription transfer) through the electronic device 101 in operation 604. Information transmitted from the entitlement server 520 to the SM-DP+ server 530 according to the profile preparation request may include an eUICC ID (e.g., EID), information about a profile information transfer server, a profile identifier or profile request time, a profile installation key, information about the electronic device 101, or information about the eUICC. The profile identifier may be referred to as a profile ID, an integrated circuit card ID (ICCID), an ISD-P, or a factor that matches a profile domain (PD). The profile ID may represent a unique ID of each profile. The eUICC ID may be a unique ID of the eSIM 201 (or eUICC) embedded in the electronic device 101, and referred to as an EID. For example, when the eUICC is preloaded with a provisioning profile, the eUICC ID may be the profile ID of the provisioning profile. For example, when the electronic device 101 and the eSIM 201 are not separated from each other, the eUICC ID may be the ID of the electronic device 101. The eUICC ID may also refer to a specific secure domain of an eUICC chip.

According to various embodiments, the entitlement server 520 may notify the electronic device 101 of a profile ready status while the SM-DP+ server 530 is preparing the profile in operation 606. A message for notifying the electronic device 101 of the profile ready status may include a callback message (e.g., a java script (JS) callback message). For example, the callback message may be transmitted, but is not limited to, when the electronic device 101 exits the web page provided by the web server 510.

According to various embodiments, the callback message transmitted from the entitlement server 520 to the electronic device 101 may be implemented in the form of "onPlanSelectionCompleted(ServiceStatus=9, smdpAddress or Activation Code)". The callback message may include service status information, an address (or address information) of the profile providing server 530 (e.g., the SM-DP+ 220), or an activation code. For example, service status information (ServiceStatus) may be displayed as 9 to indicate that the profile is delayed, or the service status information may be displayed as 1 to indicate that the profile is completely ready. According to various embodiments, the activation code may include information corresponding to an address of the SM-DP+ server 530. The electronic device 101 may identify the address of the SM-DP+ server 530 based on the activation code. The above description is merely illustrative, and in another example, although notifying of the profile ready status, the entitlement server 520 may not provide download information, and may signal the end of an end user flow through a JS callback function, to which the disclosure is not limited.

According to various embodiments, the SM-DP+ server 530 may prepare the profile in operation 608. For example, when a profile identifier (e.g., ICCID) value is transmitted in the profile preparation request, the SM-DP+ server 530 may prepare the profile corresponding to the profile identifier. In another example, in the absence of the profile identifier, one or more of a profile request type, information about the electronic device 101, information about the eUICC, and the eUICC identifier may be used to distinguish between profiles and identify the profile identifier. Further, when the profile preparation request includes the eUICC identifier, the SM-DP+ server 530 may ensure that the identified profile is subsequently downloaded and installed only in the specific eUICC. When the profile preparation request does not include the eUICC identifier, the SM-DP+ server 530 may prepare the profile without associating the identified profile with the specific eUICC. When receiving a suitable request including the eUICC identifier from the electronic device 101 later, the SM-DP+ server 530 may later associate the profile with the corresponding eUICC, for the profile download.

Further, when the profile preparation request includes a profile installation key, the SM-DP+ server 530 may manage the profile installation key in association with the specific profile and download the specific profile, when the electronic device 101 subsequently requests to download the profile using the profile installation key. The profile installation key may also be referred to as an event ID (EventID), a matching ID (MatchingID), an activation code, or an activation code token (AC_Token). Alternatively, when the profile preparation request does not include the profile installation key, the SM-DP+ server 530 may generate the profile installation key directly during the profile preparation process, and after the profile preparation, transmit the profile installation key to the entitlement server 520.

According to various embodiments, the SM-DP+ server 530 may transmit profile download information (or profile download-related information) to the entitlement server 520 in operation 610. Transmitting the profile download information may also mean registering the profile download information to the entitlement server 520. The entitlement server 520 may receive the profile download information and register the received profile download information. When the profile download information is registered as such, it may be stored in the entitlement server 520. For example, the profile download information may include at least one of the address of the SM-DP+ server 530, the profile installation key, or eUICC information. The address of the SM-DP+ server 530 may include at least one of a server address in the form of a fully qualified domain name (FQDN), an address in the form of a full uniform resource locator (URL), or an Internet protocol (IP) server address. The eUICC information may be a specific EID or a value or EID that provides the result of a hash function operation on the specific EID. The hash function operation on the EID means a calculation that includes a hash operation. For example, the EID may be subject to the hash function once or twice, or in addition to the EID, secret code information may be added as an argument to the hash function. The secret code may be a value transmitted to the user.

According to an embodiment, the electronic device 101 may request profile download through a SIM card management screen for eSIM profile download before receiving a push message indicating that the profile is ready in operation 612 described later (or without receiving the push message indicating that the profile is ready). For example, as a menu for adding a profile is selected, the electronic device 101 may transmit a profile verification request message to the SM-DP+ server 530. In another example, the electronic device 101 may perform timer-based polling (e.g., based on expiration of a specific timer). According to various embodiments, when the address of the SM-DP+ server 530 is not identified by the electronic device 101 (e.g., when the address of the SM-DP+ server 530 is not stored in the memory (e.g., the memory 130 of FIG. 1) of the electronic device 101), the electronic device 101 may request profile download information from the entitlement server 520. The entitlement server 520 may transmit the profile download information to the electronic device 101 in response to the request. The profile download information transmitted by the entitlement server 520 to the electronic device 101 may include the address of the SM-DP+ server 530. According to various embodiments, the electronic device 101 may request a profile from the SM-DP+ server 530 based on the address of the SM-DP+ server 530. According to various embodiments, when the profile is ready in the SM-DP+ server 530, the electronic device 101 may download the profile from the SM-DP+ server 530 even before receiving the push message.

According to various embodiments, when the profile download information is transmitted or registered to the entitlement server 520 in operation 610, the profile download information may be transmitted to the electronic device 101 connected to the eUICC corresponding to the eUICC information. For example, the entitlement server 520 of the MNO server 500 may transmit the profile download information to the electronic device 101 through a push message in operation 612. For example, the entitlement server 520 may transmit the push message to the electronic device 101 through a web push server (not shown). According to various embodiments, the push message may be implemented in the form shown in <Table 1> below.

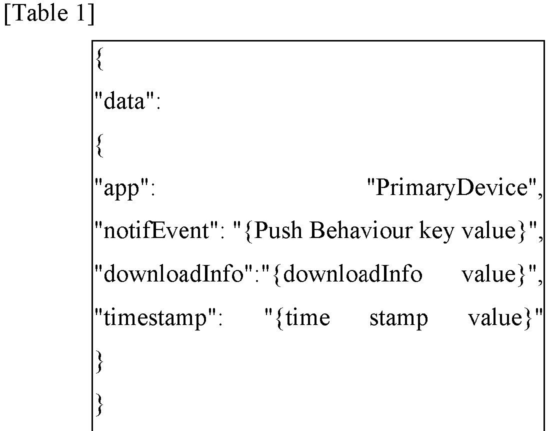

In <Table> 1 above, "downloadInfo" may refer to the address of the SM-DP+ server 530 (e.g., the SM-DP+ 220) or the activation code. According to various embodiments, "notifEvent" in <Table 1> may include information or an ID indicating that the profile is ready or that the profile is ready for download (e.g., "READY_TO_DOWNLOAD_PROFILE").

According to various embodiments, when the MNO server 500 provides the profile through a plurality of SM-DP+ servers 530, the push message may not include the address of the SM-DP+ server 530. For example, when the memory (e.g., the memory 130 in FIG. 1) of the electronic device 101 does not store the address of the SM-DP+ server 530, when the push message does not include the address of the SM-DP+ server 530, or when the callback message notifying the profile ready status in operation 606 does not include the address of the SM-DP+ server 530, the electronic device 101 may request profile download information (e.g., information corresponding to the address of the SM-DP+ server 530) from the entitlement server 520 in operation 614. The entitlement server 520 may transmit the profile download information to the electronic device 101 in response to the request in operation 616. The profile download information transmitted to the electronic device 101 by the entitlement server 520 may include information (e.g., a server address in the form of an FQDN, an address in the form of a full URL, or an IP server address, and an activation code) corresponding to the address of the SM-DP+ server 530.

According to various embodiments, in operation 618, the electronic device 101 may request a profile from the SM-DP+ server 530 using the address of the SM-DP+ server 530 and a profile installation key included in the profile download information. The electronic device 101 may obtain an IP address from a domain name server using the FQDN address of a profile providing server included in the profile download information, and request the profile from the IP address. According to various embodiments, the electronic device 101 may transmit the profile installation key directly to the SM-DP+ server 530, or the electronic device 101 may provide the installation key to the SM-DP+ server 530 after authenticating the SM-DP+ server 530 through the authentication server 540.

According to various embodiments, in operation 620, the SM-DP+ server 530 may download the profile to the electronic device 101 after performing the authentication process. The electronic device 101 may download and install the profile in the eSIM 201 (e.g., eUICC) in operation 622. The electronic device 101 may enable the profile after the profile installation. A subscription, opening, or subscription transfer procedure for using a communication service through profile download to the electronic device 101 may be completed by enabling the profile. The electronic device 101 may use a communication network after authentication with a mobile communication system, using the profile installed in the eSIM 201.

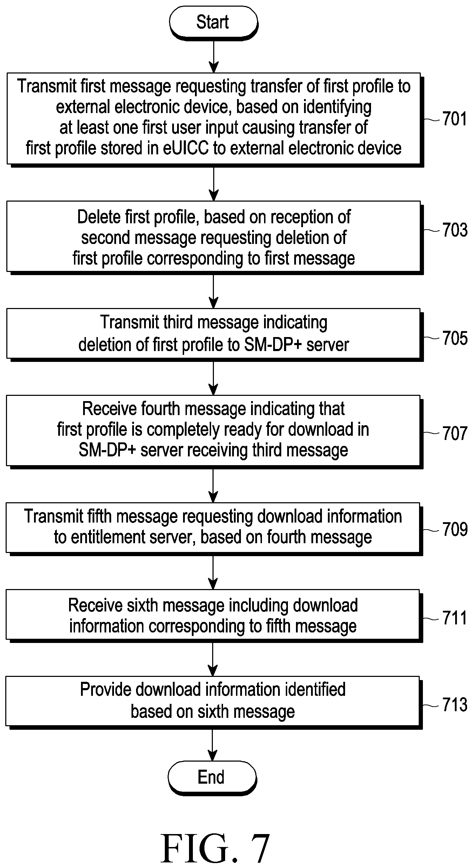

FIG. 7 is a flowchart illustrating a method for operating an electronic device according to various embodiments.

According to various embodiments, the electronic device 101 (e.g., the processor 120 of FIG. 1) may transmit a first message requesting transfer of a first profile (or subscription) to an external electronic device based on identifying at least one first user input that causes the transfer of the first profile (or subscription) stored in the eUICC to the external electronic device in operation 701. For example, the electronic device 101 may transmit the first message to an entitlement server (e.g., the entitlement server 520 in FIG. 5) including the web server 510. Alternatively, when the entitlement server 520 and the web server 510 are implemented independently, the electronic device 101 may transmit the first message to the web server 510, which should not be construed as limiting. For example, the electronic device 101 may provide at least one UI for causing the transfer of the profile and receive the at least one first user input through the at least one UI. Examples of the UI will be described later and its type is not limited. The UI may include information for transferring the first profile or information for transferring the subscription for intuitive recognition of the user. The electronic device 101 may further perform at least one of an authentication process, an eligibility check, or a subscription-related action (e.g., ManageSubscription) with the entitlement server 520 prior to transmitting at least some of at least one first message to the entitlement server 520. Based on receiving the first message, the entitlement server 520 may request a new subscription from a BSS/OSS (e.g., the BSS/OSS 550 in FIG. 5). The BSS/OSS 550 may request the new profile from the SM-DP+ server 530 based on an ICCID in use for the electronic device 101 via an ES2+ interface. The SM-DP+ server 530 may provide a response using the current ICCID to the BSS/OSS 550. The BSS/OSS 550 may request deletion of the ICCID from the entitlement server 520 based on the response.

According to various embodiments, in operation 703, the electronic device 101 may delete the first profile based on receiving a second message requesting deletion of the first profile corresponding to the first message from the entitlement server 520. As described above, the BSS/OSS 550 may request the deletion of the ICCID from the entitlement server 520, and the entitlement server 520 may transmit the second message requesting the deletion of the first profile to the electronic device 101 based on the request. The second message may include the ICCID to be deleted, and the electronic device 101 may delete the first profile corresponding to the ICCID. It will be understood by those skilled in the art that the ICCID is an example, and the profile identifier is not limited.

According to various embodiments, in operation 705, the electronic device 101 may transmit a third message indicating the deletion of the first profile to the SM-DP+ server 530. The third message may include information about a result of the profile deletion, or at least a portion of identification information about the third message may indicate the profile deletion as managed by the SM-DP+ server 530. The SM-DP+ server 530 may notify the BSS/OSS 550 of the deletion of the first profile, based on identifying the deletion of the first profile. Based on identifying the deletion of the first profile, the BSS/OSS 550 may request a new profile from the SM-DP+ server 530. For example, the BSS/OSS 550 may request a new profile specifying the ICCID of the first profile from the SM-DP+ server 530. When the first profile is ready (or ready for download), the SM-DP+ server 530 may notify the BSS/OSS 550 that the first profile is ready (or ready for download). The BSS/OSS 550 may notify the entitlement server 520 that the first profile is ready (or the first profile is ready for download).

According to various embodiments, in operation 707, the electronic device 101 may receive, from the entitlement server 520, a fourth message indicating that the first profile is ready for download in the SM-DP+ server 530 receiving the third message. As described above, upon notification from the BSS/OSS 550 that the first profile is completely ready (or ready for download), the entitlement server 520 may transmit the fourth message to the electronic device 101.

According to various embodiments, in operation 709, the electronic device 101 may transmit a fifth message requesting download information to the entitlement server 520 based on the fourth message. In response to the fifth message, the entitlement server 520 may provide a sixth message including the download information. In operation 711, the electronic device 101 may receive the sixth message including the download information corresponding to the fifth message. In operation 713, the electronic device 101 may provide the download information identified based on the sixth message. In an example, the electronic device 101 may output the download information or information (e.g., a QR code) from which the download information is identifiable, through the display module 160. In an example, the electronic device 101 may provide the download information, or the information from which the download information is identifiable, to the external electronic device with which a communication connection has been established, via the communication connection. However, the manner in which the download information is provided is not limited. The external electronic device may identify the provided download information (or the information from which the download information is identifiable). For example, when the electronic device 101 displays the QR code, the user may take a picture of the QR code using a camera of the external electronic device, and the external electronic device may identify the download information based on the QR code. For example, the external electronic device may identify the download information based on the information received via the communication connection. The external electronic device may enable the first profile based on the download information. Accordingly, the first profile stored in the electronic device 101 may be deleted, and the first profile may be enabled in the external electronic device, which may be referred to as profile reuse, profile transfer, or subscription transfer.

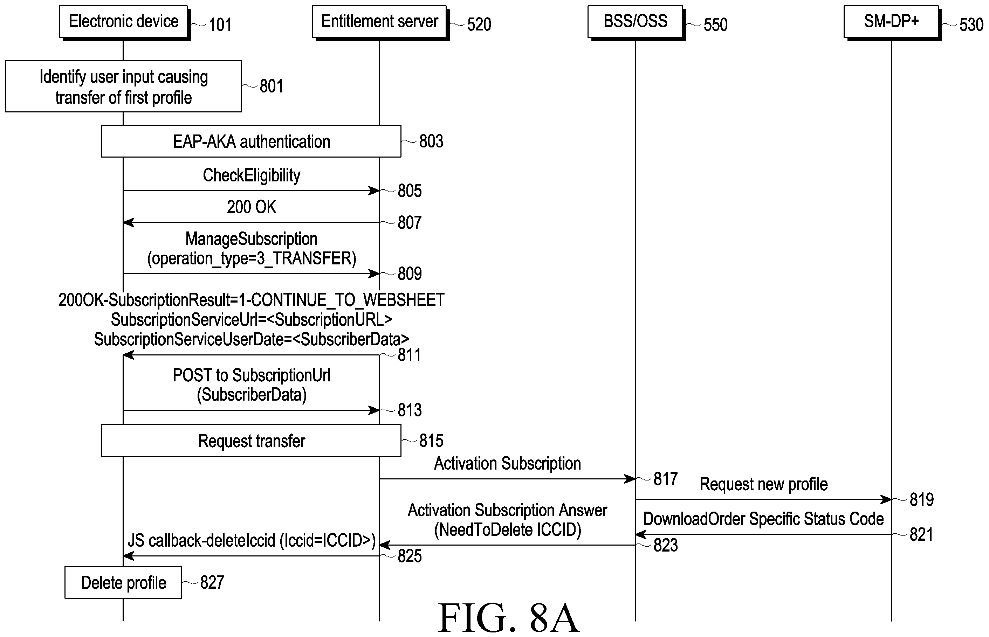

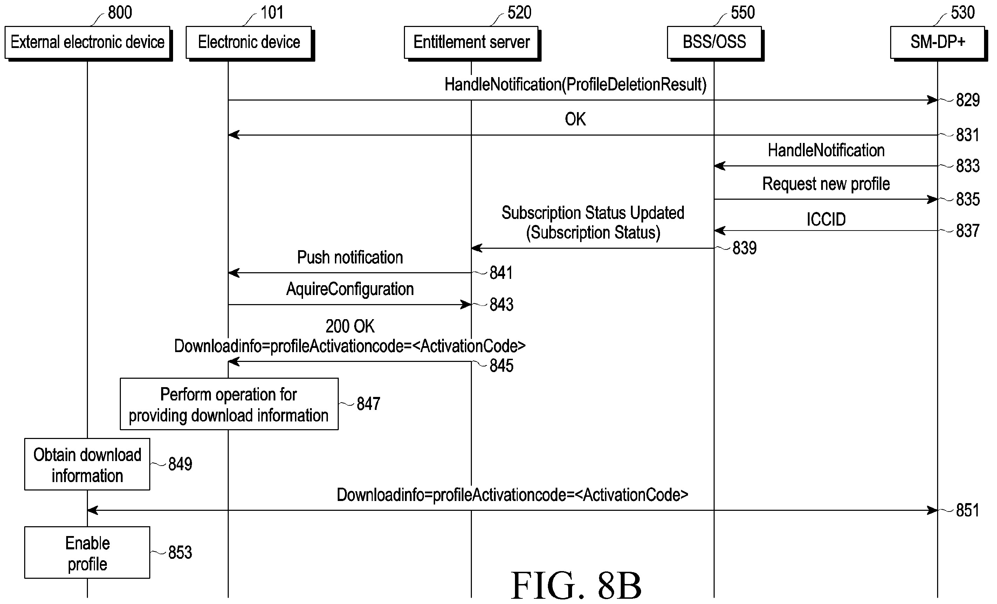

FIGS. 8A and 8B are flowcharts illustrating a method for operating an electronic device and/or at least one identity of an MNO server according to various embodiments.

According to various embodiments, in operation 801, the electronic device 101 (e.g., the processor 120 in FIG. 1) may identify a user input that causes transfer of a first profile. For example, the electronic device 101 may provide a UI for causing profile transfer (or, subscription transfer) and receive the user input through the UI. The UI may include information for transferring the first profile or information for transferring the subscription for intuitive recognition of the user. Based on the user input, the electronic device 101 may perform an authentication process with the entitlement server 520 in operation 803. For example, the electronic device 101 may perform extensible authentication protocol-authentication and key agreement (EAP-AKA)-based authentication, to which the disclosure is not limited. EAP-AKA is an EAP mechanism for authentication and session key distribution using a SIM, which may follow, for example, but is not limited to, RFC 4187. When the authentication process is completed, the electronic device 101 may request an eligibility check (CheckEligibility). The request for CheckEligibility may be transmitted in a GET method or a POST method. For example, the electronic device 101 may transmit a request message to the entitlement server 520 according to an on-device service activation (ODSA) procedure disclosed in the standard document TS. 43, including any of the ODSA operations shown in <Table 2> below.

**[Table 2]**

| ODSA operation | Description |
|---|---|
| CheckEligibility | To verify if end-user is allowed to invoke the ODSA application |
| ManageSubscription | To request for subscription-related action on a primary or companion device. |
| ManageService | To activate / deactivate the service on the primary or companion device. |
| AcquireConfiguration | To provide service-related data about a primary or companion device |
| AcquirePlan | To request available plans to be offered by the MNO to an specific user or MDM |

Referring to <Table 2> above, in operation 805, the electronic device 101 may request an eligibility check by transmitting a request message including "CheckEligibility" as action information to the entitlement server 520 according to the procedure disclosed in the standard document TS. 43. According to various embodiments, the request message for the eligibility check may further include identification information (e.g., IMEI or UUID) or an authentication token of the electronic device 101. Additionally, although not shown, the entitlement server 520 may transmit a profile query to the BSS/OSS 550. The profile query may include subscription identification information (e.g., "SubscriptionID"). The BSS/OSS 550 may transmit a profile answer corresponding to the profile query to the entitlement server 520. In operation 807, the entitlement server 520 may transmit a 200 OK message to the electronic device 101. For example, when the eligibility check is completed successfully, the 200 OK message may include information "enabled".

According to various embodiments, in operation 809, the electronic device 101 may transmit a subscription-related action request message to the entitlement server 520. The subscription-related action request message may include information "ManageSubscription" in Table 2 for requesting a subscription-related action. The subscription-related action request message may further include the identification information (e.g., IMEI or UUID) or authentication token of the electronic device 101. According to various embodiments, the subscription-related action request message may further include type information in <Table 3> below as parameter information.

**[Table 3]**

| Parameter | Type | Values | Description |
|---|---|---|---|
| Operation type | Integer | 0-SUBSCRIBE | to activate a subscription for the eSIM device. |
| | | 1-UNSUBSCRIBE | to cancel a subscription for the eSIM device. |
| | | 2-CHANGE SUBSCRIPTION | to manage an existing subscription on the eSIM device. |
| | | 3-TRANSFER SUBSCRIPTION | to transfer a subscription from an existing device (with physical SIM or eSIM) to the eSIM device |
| | | 4-UPDATE SUBSCRIPTION | to inform the network of a subscription update on the eSIM device |

Referring to <Table> 3 above, the subscription-related action request message including "ManageSubscription" as action information in <Table 2> above may include at least one of parameter "SUBSCRIBE", "UNSUBSCRIBE", "CHANGE SUBSCRIPTION", "TRANSFER SUBSCRIPTION", or "UPDATE SUBSCRIPTION". The electronic device 101 may transmit a subscription-related request message including the value of "3-TRANSFER SUBSCRIPTION" as the type in <Table 3> to the entitlement server 520. "TRANSFER SUBSCRIPTION" may be a request to transfer subscription information present in the eSIM to an external electronic device or to another eSIM. Although not shown, the entitlement server 520 may transmit a subscription query to the BSS/OSS 550. The subscription query may include the subscription identification information (e.g., "SubscriptionID") or an IMEI. In response to receiving the subscription query, the BSS/OSS 550 may transmit a subscription answer message to the entitlement server 520. According to various embodiments, the subscription answer message may include address information (e.g., URL information) for accessing the web server 510. In response to receiving the subscription answer message, the entitlement server 520 may transmit a response message (e.g., a "200 OK" message) to the electronic device 101 in response to the subscription-related action request, in operation 811.

According to various embodiments, the response message to the subscription-related action request may further include subscription result ("SubscriptionResult") information in <Table 4> below as parameter information.

**[Table 4]**

| Parameter | type | Values | Description |
|---|---|---|---|
| Sub scriptionResult | Integer | 1-CONTINUE TO WEB SHEET | Indicates that end-user must go through the subscription web view procedure, using information included below. |
| | | 2-DONWLOAD PROFILE | Indicates that a communication profile must be downloaded by the eSIM device, with further information included in response |
| | | 3-DONE | Indicates that subscription flow has ended and the end-user has already downloaded the profile so there is no need to perform any other action.This value is only present as part of the ManageSubscription request where operation_type="4 ? UPDATE SUBSCRIPTION" |
| | | 4-DELAYED DOWNLOAD | Indicates that a profile is not ready to be downloaded when a user request to transfer subscription or to add the new subscription through native UX on the eSIM device. |
| | | 5 - DISMISS | Indicates that subscription flow has ended without completing the ODSA procedure. An eSIM profile is not available. |
| | | 6 - DELETE PROFILE IN USE | Indicates that the profile in use needs to be deleted to complete the subscription transfer. |

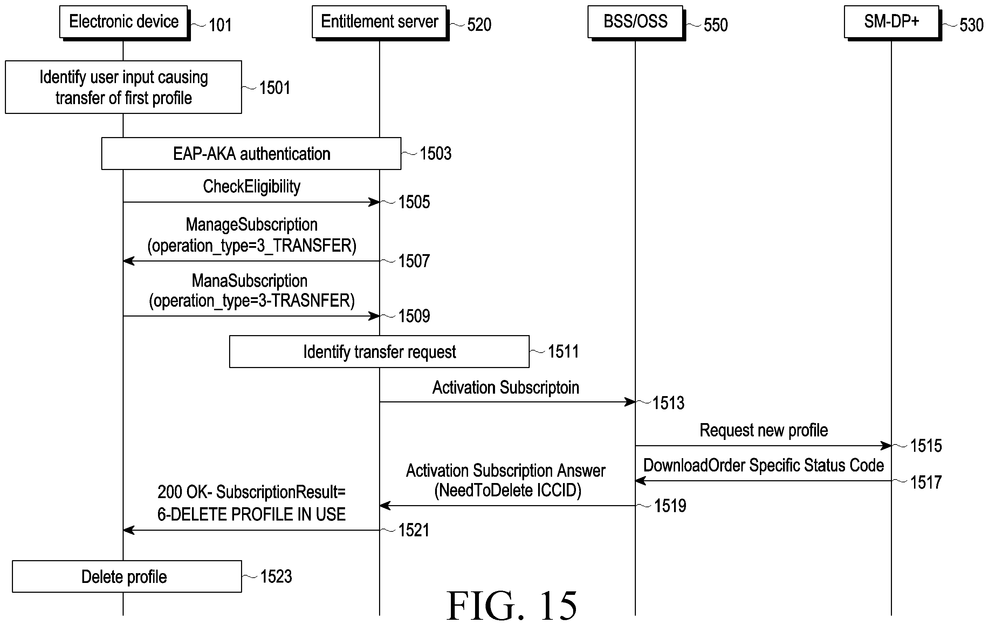

According to various embodiments, referring to <Table> 4 above, the response message (e.g., "200 OK" message) to the subscription-related action request may include at least one of parameter "CONTINUE TO WEBSHEET," "DOWNLOAD PROFILE," "DONE," or "DELAYED DOWNLOAD." For example, the 200 OK message may include "CONTINUE TO WEBSHEET" and the address information (e.g., SubscriptionURL) for accessing the web server 510 and/or user-related data (e.g., SubscriberData). In another example, "6-DELETE PROFILE IN USE" may be used, which will be described with reference to FIG. 15. In operation 813, the electronic device 101 may access using the accessible address information (e.g., SubscriptionURL) and/or the user-related data (e.g., SubscriberData). The electronic device 101 may obtain and provide (e.g., display) an operator web page by accessing it. After providing (e.g., displaying) a UI (e.g., the operator web page), the electronic device 101 may identify a user input instructing profile transfer (or subscription transfer). The UI may include, but is not limited to, an object causing confirmation of the profile transfer (or subscription transfer). Based on identifying the user input, the electronic device 101 may request the profile transfer (or subscription transfer), for example, from the entitlement server 520 including the web server 510 in operation 815. When the web server 510 is implemented independently of the entitlement server 520, the electronic device 101 may request the profile transfer (or subscription transfer) from the web server 510. In operation 817, the entitlement server 520 (or the web server 510) may transmit an Activation Subscription message to the BSS/OSS 550. The Activation Subscription message may be referred to as, for example, a new subscription request. For example, the Activation Subscription message may include information indicating that the electronic device 101 requests the profile transfer. In operation 819, the BSS/OSS 550 may request a new profile from the SM-DP+ server 530 via the ES2+ interface. Although the new profile request may include an ICCID (e.g., an ICCID in use for the electronic device 101), the profile identifier is not limited. The SM-DP+ server 530 may identify that the ICCID is already in use, and thus provide a DownloadOrder Specific Status Code to the BSS/OSS 550. The SM-DP+ server 530 may identify that the ICCID is already in use, based on receiving the new profile request with the same ICCID, even though the profile has not been deleted after it was provided, for example, as illustrated in FIG. 6. The DownloadOrder Specific Status Code may include, for example, Subject code: 8.2.1, subject: ICCID, Reason code: 3.3, Reason: Already in Use, which may indicate that the profile identified by the provided ICCID is unavailable.

According to various embodiments, the BSS/OSS 550 may identify that deletion of the ICCID is required based on receiving the DownloadOrder Specific Status Code from the SM-DP+ server 530. For example, the BSS/OSS 550 may identify that deletion of the ICCID is required based on the ICCID of the profile requested to be transferred being already in use. The BSS/OSS 550 may provide an Activation Subscription Answer to the entitlement server 520 in operation 823. The Activation Subscription Answer may include information indicating that the deletion of the specific ICCID is required (e.g., "NeedToDelete ICCID"). The entitlement server 520 may identify that the deletion of the specific ICCID is required, based on the Activation Subscription Answer. In operation 825, the entitlement server 520 may transmit a JS callback message instructing the deletion of the ICCID to the electronic device 101. For example, the JS callback message may include information indicating that the deletion of the ICCID is required (e.g., "deleteICCID") and/or the value of the ICCID required to be deleted. Based on the JS callback message, the electronic device 101 may delete the profile with the ICCID in operation 827. In an example, the electronic device 101 may delete the profile, based on receiving the JS callback message. In another example, the electronic device 101 may provide (e.g., display) a UI for inquiring whether to delete the profile and/or receiving confirmation for the deletion of the profile, based on receiving the JS callback message. The electronic device 101 may delete the profile based on identifying a user input instructing the deletion of the profile through the UI.

Referring to FIG. 8B, the electronic device 101 may transmit a HandleNotification to the SM-DP+ server 530, for example, via an ES9+ interface in operation 829. The HandleNotification may include a result of the profile deletion (e.g., ProfileDeletionResult). Based on information included in the HandleNotification, the SM-DP+ server 530 may identify that the profile with the specific ICCID has been deleted. In operation 831, the SM-DP+ server 530 may transmit an OK message corresponding to the HandleNotification to the electronic device 101. In operation 833, the SM-DP+ server 530 may transmit the HandleNotification indicating that the profile has been deleted to the BSS/OSS 550, for example, via the ES+2 interface. Based on the HandleNotification, the BSS/OSS 550 may identify that the profile has been deleted. Based on identifying the deletion of the profile, the BSS/OSS 550 may request a new profile from the SM-DP+ server 530, for example, via the ES2+ interface in operation 835. Although the new profile request may include the deleted ICCID, this is exemplary and the profile identifier is not limited. The SM-DP+ server 530 may prepare the profile with the ICCID based on the new profile request. When the profile with the ICCID is completely ready, the SM-DP+ server 530 may transmit the ICCID of the prepared profile to the BSS/OSS 550, for example, via the ES2+ interface in operation 837. The BSS/OSS 550 may transmit a Subscription Status Update to the entitlement server 520 in operation 839. The Subscription Status Update may be referred to as an active subscription answer and include, for example, profile information. The entitlement server 520 may transmit a push notification to the electronic device 101 in operation 841. The push notification may include, for example, the profile information. Based on receiving the push notification, the electronic device 101 may transmit an AquireConfiguration to the entitlement server 520 in operation 843. The AquireConfiguration may be, for example, but not limited to, a message requesting download information for the profile. The entitlement server 520 may transmit a 200 OK to the electronic device 101 in operation 845. The 200 OK may include, for example, the download information. In another example, the electronic device 101 may identify the download information in the push notification received in operation 841, and in this case, operation 843 and/or operation 845 may not be performed. In operation 847, the electronic device 101 may perform an operation for providing the download information. An external electronic device 800 may obtain the download information in operation 849. For example, the electronic device 101 may output (e.g., display) the download information or information (e.g., a QR code) from which the download information is identifiable. For example, the user may view the download information (or information mapped to the download information) displayed on the electronic device 101 and enter it into the external electronic device 800, thereby allowing the external electronic device 800 to obtain the download information. Alternatively, the user may use a camera of the external electronic device 800 to capture the QR code displayed on the electronic device 101, and the external electronic device 800 may use the image of the QR code to obtain the download information. In another example, the electronic device 101 may provide the download information or the information from which the download information is identifiable to the external electronic device 800 via a communication connection. The external electronic device 800 may obtain the download information based on a communication signal received via the communication connection. However, the method for providing the download information by the electronic device 101 and/or the method for obtaining the download information by the external electronic device 800 is not limited. The external electronic device 800 may perform an operation (e.g., Get Communication profile) for obtaining the profile using the download information, for example, via an ES9+ interface in operation 851. The external electronic device 800 may enable the obtained profile in operation 853. Accordingly, the profile with the specific ICCID may be deleted in the electronic device 101, the profile with the specific ICCID may be enabled in the external electronic device 800, and the profile (or subscription) with the specific ICCID may be transferred.

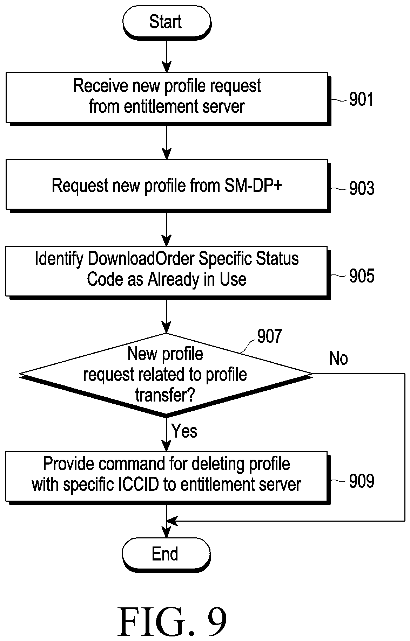

FIG. 9 is a flowchart illustrating a method for operating an MNO server according to various embodiments.

According to various embodiments, the MNO server (e.g., the BSS/OSS 550 in FIG. 5) may receive a new profile request from an entitlement server (e.g., the entitlement server 520 in FIG. 5) in operation 901. For example, as described with reference to FIG. 8A, the entitlement server 520 may transmit a new profile to the BSS/OSS 550 using an activation subscription. The new profile request may include, for example, information related to profile (or subscription) transfer. Accordingly, the MNO server may identify that the new profile request is for profile (or subscription) transfer. In operation 903, the MNO server may request the new profile from the SM-DP+ server 530, for example, via the ES2+ interface, based on receiving the new profile request. Although the new profile request may include a specific ICCID, the profile identifier is not limited. In operation 905, the MNO server may identify that DownloadOrder Specific Status Code received from the SM-DP+ server 530 is Already in Use. For example, the MNO server may identify that the corresponding ICCID is already in use. In operation 907, the MNO server may identify whether the new profile request is related to profile transfer. When the new profile request is related to profile transfer (yes in operation 907), the MNO server may provide a profile delete command for the specific ICCID to the entitlement server 520 in operation 909. When the new profile request is related to profile transfer (no in operation 907), the MNO server may terminate the operation or identify that there is an error, for example, in the management of the profile with the specific ICCID, to which the disclosure is not limited.

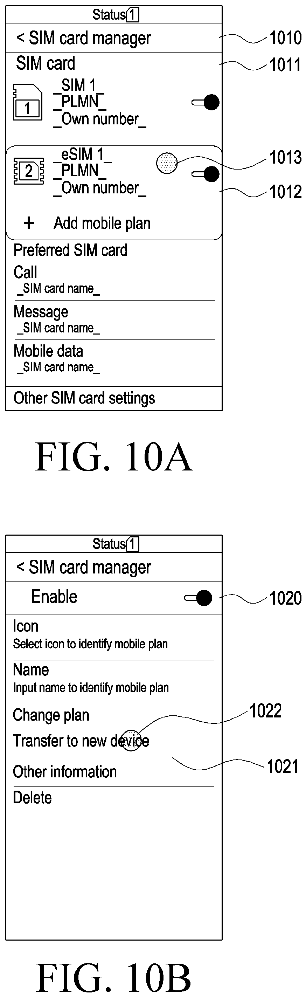

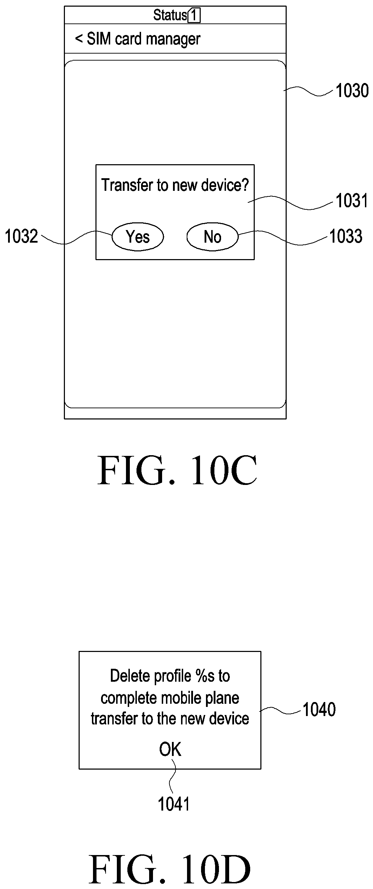

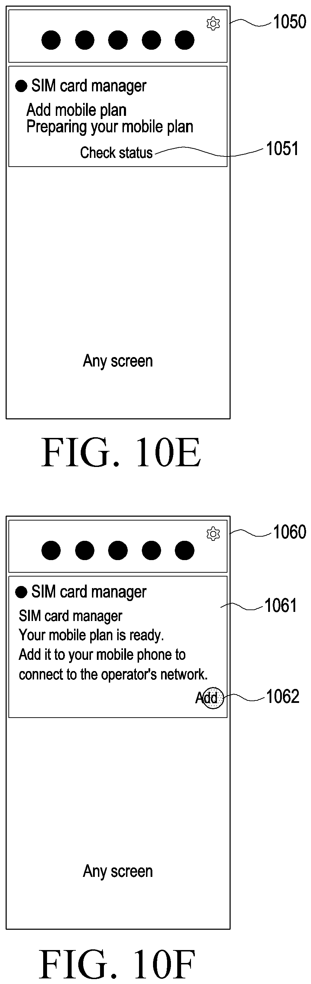

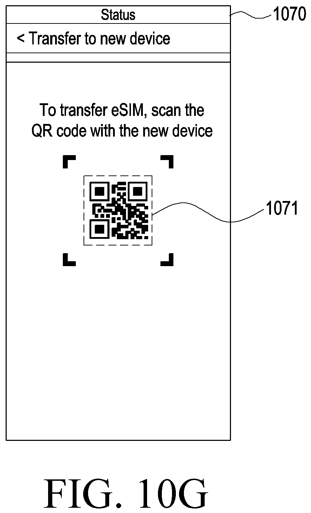

FIG. 10A is a diagram illustrating a screen displayed on an electronic device according to various embodiments. For example, the electronic device 101 may display a screen 1010 including information 1011 related to an inserted SIM and information 1012 related to an enabled profile. When identifying a selection 1013 (e.g., touch input) of an area in which the information 1012 related to the enabled profile is displayed, the electronic device 101 may provide detailed information related to the profile. FIG. 10B is a diagram illustrating a screen displayed on an electronic device according to various embodiments. For example, the electronic device 101 may provide a screen 1020 based on the selection 1013 on the screen 1010 of FIG. 10A. The screen 1020 may include detailed information about the profile for which the selection 1013 has been made and/or information related to a control function. The screen 1020 may include an area 1021 that causes the profile (or subscription) to be transferred, for example, to an external electronic device. Based on a selection 1022 of the area 1021, the electronic device 101 may perform, for example, authentication, an eligibility check, and/or a subscription-related action. Further, as described with reference to FIG. 8A, the electronic device 101 may display an operator page from the web server 510. FIG. 10C is a diagram illustrating a screen displayed on an electronic device according to various embodiments. For example, the electronic device 101 may display a screen 1030 as the operator page from the web server 510. The screen 1030 may include text 1031 inquiring whether to transfer the profile, a button 1032 for confirmation, and a button 1033 for declining. For example, when the button 1033 for declining is selected, the electronic device 101 may stop transferring the profile. For example, when the button 1032 is selected, the electronic device 101 may transmit a message requesting to transfer the profile to the entitlement server 520 including the web server 510 (or to the web server 510 when independently implemented). As described above, transmission of an activation subscription from the entitlement server 520 to the BSS/OSS (e.g., the BSS/OSS 550), transmission of the activation subscription from the BSS/OSS 550 to the SM-DP+ server (e.g., the SM-DP+ server 530), transmission of a new profile request from the BSS/OSS 550 to the SM-DP+ server 530, transmission of a DownloadOrder Specific Status Code from the SM-DP+ server 530 to the BSS/OSS 550, and transmission of a profile deletion request from the BSS/OSS 550 to the entitlement server 520 may be performed subsequently. The entitlement server 520 may transmit a JS callback message requesting deletion of a profile with a specific ICCID to the electronic device 101. The electronic device 101 may display a screen 1040 of FIG. 10D based on receiving the JS callback message. The screen 1040 may include text about deleting the specific profile (e.g., %s) and a button 1041 for confirming the deletion. When the button 1041 is selected, the electronic device 101 may delete the specific profile. The electronic device 101 may notify the SM-DP+ server 530 of the deletion of the specific profile. The electronic device 101 may display, for example, a screen 1050 as illustrated in FIG. 10E. The screen 1050 may include a button 1051 together with a message indicating that the profile is being prepared. When identifying that the button 1051 is selected, the electronic device 101 may request information about a profile ready status from the entitlement server 520 and/or the SM-DP+ server 530 and, when receiving a response, provide the information about the profile ready status. Subsequently, the electronic device 101 may receive a push notification indicating that the profile is completely ready in the SM-DP+ server 530 from the entitlement server 520, as described with reference to FIG. 8B. Based on receiving the push notification, the electronic device 101 may display, for example, a screen 1060 of FIG. 10F. The screen 1060 may include text 1061 indicating that the profile is completely ready and a button 1062 for proceeding to the next step. When the button 1062 is selected, the electronic device 101 may obtain download information, for example, from the entitlement server 520. The electronic device 101 may display a screen 1070 including a QR code 1071 corresponding to the download information, for example, as illustrated in FIG. 10G. As described above, the user may take an image including the QR code 1071 of the electronic device 1010 using the external electronic device 800. Accordingly, the external electronic device 800 may obtain the download information based on the image including the QR code 1071 and download the profile from the SM-DP+ server 530 based on the download information.

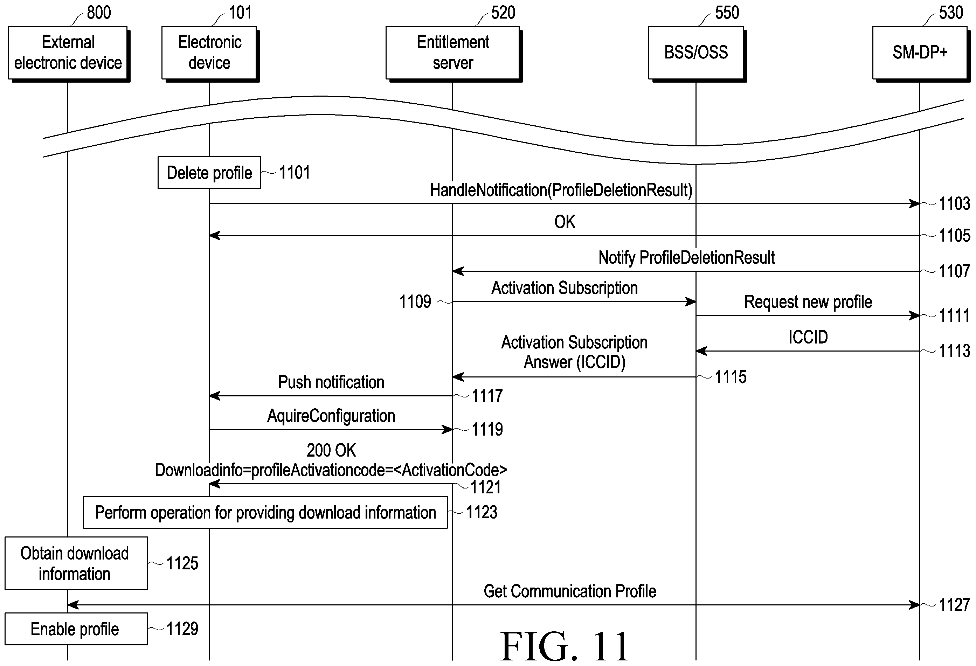

FIG. 11 is a flowchart illustrating a method for operating an electronic device and/or at least one entity of an MNO server according to various embodiments.

According to various embodiments, the electronic device 101 (e.g., the processor 120 in FIG. 1) may delete a profile in operation 1101. For example, the electronic device 101 may delete the profile based on a profile deletion request from the entitlement server 520, as described with reference to FIG. 8A. In operation 1103, the electronic device 101 may transmit a HandleNotification to the SM-DP+ server 530. The HandleNotification may include information about a result of the profile deletion (e.g., ProfileDeletionResult). In operation 1105, the SM-DP+ server 530 may transmit an OK to the electronic device 101. In contrast to FIG. 8B, in the embodiment of FIG. 11, an interface may be provided between the entitlement server 520 and the SM-DP+ server 530. Accordingly, the SM-DP+ server 530 may transmit a Notify ProfileDeletionResult indicating the result of the profile deletion to the entitlement server 520 in operation 1107. Based on receiving the Notify ProfileDeletionResult, the entitlement server 520 may request an Activation Subscription, for example, a new profile, from the BSS/OSS 550 in operation 1109. Based on receiving the Activation Subscription, the BSS/OSS 550 may request the new profile from the SM-DP+ server 530 in operation 1111. The SM-DP+ server 530 may prepare the profile with a corresponding ICCID based on the new profile request. When the profile with the ICCID is completely ready, the SM-DP+ server 530 may transmit the ICCID to the BSS/OSS 550, for example, via the ES2+ interface in operation 1113. The BSS/OSS 550 may transmit a Subscription Status Updated to the entitlement server 520 in operation 1115. The entitlement server 520 may transmit a push notification to the electronic device 101 in operation 1117. The push notification may include, for example, profile information. Based on receiving the push notification, the electronic device 101 may transmit an AquireConfiguration to the entitlement server 520 in operation 1119. The AquireConfiguration may be, for example, but not limited to, a message requesting download information for the profile. The entitlement server 520 may transmit a 200 OK to the electronic device 101 in operation 1121. The 200 OK may include, for example, the download information (e.g., dwonloadinfo=profileAcivationCode=<ActivationCode>). The electronic device 101 may perform an operation for providing the download information in operation 1123. The external electronic device 800 may obtain the download information in operation 1125. The external electronic device 800 may perform an operation for obtaining the profile (e.g., Get Communication profile) using the download information, for example, via the ES9+ interface in operation 1127. The external electronic device 800 may enable the obtained profile in operation 1129.

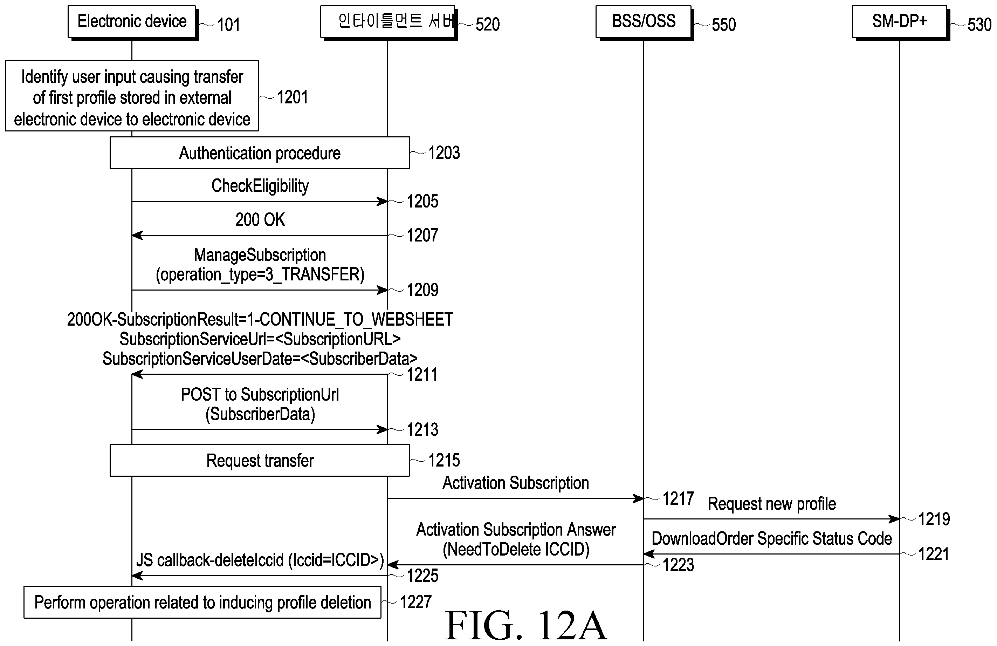

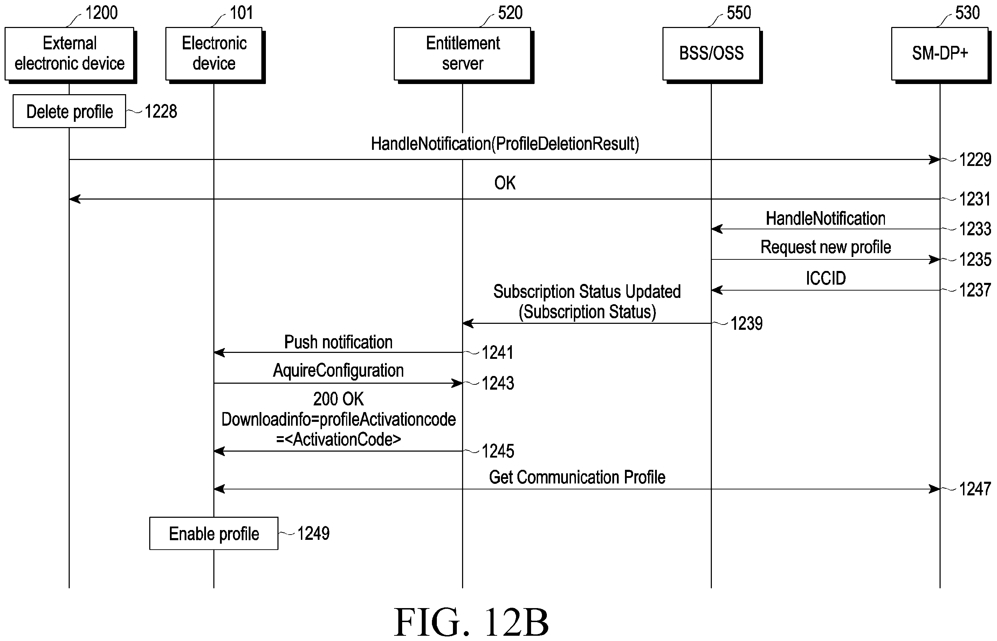

FIGS. 12A and 12B are flowcharts illustrating a method for operating an electronic device and/or at least one entity of an MNO server according to various embodiments.

According to various embodiments, the electronic device 101 (e.g., the processor 120 of FIG. 1) may identify a user input that causes a first profile stored in an external electronic device 1200 to be transferred to the electronic device in operation 1201. For example, it is assumed that the external electronic device 1200 may store the first profile, and the electronic device 101 does not store the first profile. For example, the electronic device 101 may provide (e.g., display) a UI indicating "profile transfer from another electronic device to the current electronic device." The electronic device 101 may identify a user input causing transfer of the first profile stored in the external electronic device to the electronic device 101 through the UI. According to various embodiments, the electronic device 101 may display an additional UI for selecting one of a plurality of operators and obtain an additional user input for selecting an operator. Based on the user input, the electronic device 101 may perform an authentication process with the entitlement server 520 in operation 1203. The electronic device 101 may perform OPEN ID-based authentication and/or SMS-OTP-based authentication. When the authentication process is completed, the electronic device 101 and/or the entitlement server 520 may identify a user to whom the profile (or subscription) is to be transferred, and/or identify a profile identifier (e.g., ICCID) related to the profile.

According to various embodiments, the electronic device 101 may request an eligibility check from the entitlement server 520 in operation 1205. The entitlement server 520 may transmit a 200 OK message to the electronic device 101 in operation 1207. For example, when the eligibility check is completed successfully, the 200 OK message may include information "enabled". In operation 1209, the electronic device 101 may transmit a subscription-related action request message to the entitlement server 520. The subscription-related action request message may include information "ManageSubscription" for requesting a subscription-related action in Table 2. The electronic device 101 may transmit a subscription-related request message including the value of "3-TRANSFER SUBSCRIPTION" among the types in Table 3 to the entitlement server 520. In response to the reception of the subscription response message, the entitlement server 520 may transmit a response message (e.g., a "200 OK" message) to the electronic device 101 in response to the subscription-related action request in operation 1211. For example, the 200 OK message may include "CONTINUE TO WEBSHEET" and include address information (e.g., SubscriptionURL) for accessing a web server (e.g., the web server 510 in FIG. 5) and/or user-related data (e.g., SubscriberData). The electronic device 101 may access using the accessible address information (e.g., SubscriptionURL) and/or the user-related data (e.g., SubscriberData) in operation 1213. The electronic device 101 may obtain and provide (e.g., display) an operator web page by accessing it. After providing (e.g., displaying) a UI (e.g., the operator web page), the electronic device 101 may identify a user input instructing the profile transfer (or subscription transfer). The UI may include, but is not limited to, an object for causing the profile transfer (or subscription transfer). Based on identifying the user input, the electronic device 101 may request the profile transfer (or subscription transfer) from the entitlement server 520 including the web server 510 (or to the web server 510 when implemented independently) in operation 1215. The entitlement server 520 may transmit an Activation Subscription message to the BSS/OSS 550 in operation 1217. For example, the Activation Subscription message may include information indicating that the electronic device 101 requests the profile transfer. The BSS/OSS 550 may request a new profile from the SM-DP+ server 530 via the ES2+ interface in operation 1219. Although the new profile request may include an ICCID (e.g., an ICCID in use for the electronic device 101), the profile identifier is not limited. The SM-DP+ server 530 may identify that the ICCID is already in use and thus provide a DownloadOrder Specific Status Code to the BSS/OSS 550. The SM-DP+ server 530 may identify that the ICCID is already in use based on receiving the new profile request with the same ICCID, even though the profile has not been deleted after it was provided, for example, as illustrated in FIG. 6. The DownloadOrder Specific Status Code may include, for example, Subject code: 8.2.1, subject: ICCID, Reason code: 3.3, Reason: Already in Use, which may indicate that the profile identified by the provided ICCID is unavailable.

According to various embodiments, the BSS/OSS 550 may identify that deletion of the ICCID is required based on receiving the DownloadOrder Specific Status Code from the SM-DP+ server 530. For example, the BSS/OSS 550 may identify that the deletion of the ICCID is required based on the ICCID of the profile requested to be transferred being already in use. The BSS/OSS 550 may provide an Activation Subscription Answer to the entitlement server 520 in operation 1223. The Activation Subscription Answer may include information (e.g., "NeedToDelete ICCID") indicating that the deletion of the specific ICCID is required. The entitlement server 520 may identify that the deletion of the specific ICCID is required based on the Activation Subscription Answer. In operation 1225, the entitlement server 520 may transmit a JS callback message indicating that the deletion of the ICCID is required to the electronic device 101. For example, the JS callback message may include information (e.g., "deleteICCID") indicating that the deletion of the ICCID is required and/or the value of the ICCID required to be deleted. Based on the JS callback message, the electronic device 101 may perform an operation related to inducing deletion of the profile with the ICCID in operation 1227. In an example, the electronic device 101 may display text to the effect that the deletion of the profile in the external electronic device 1200 is required. In another example, the electronic device 101 may transmit a communication signal indicating that the deletion of the profile is requested to the external electronic device 1200 via a communication connection.

Referring to FIG. 12B, the external electronic device 1200 may delete the first profile in operation 1228. For example, the user may identify the text displayed on the electronic device 101 (e.g., the text indicating that the deletion of the profile with the corresponding ICCID is required), and operate the external electronic device 1200 to delete the first profile based on the text. The external electronic device 1200 may delete the first profile based on a user input that causes the profile to be deleted. Alternatively, the external electronic device 1200 may receive the communication signal indicating that the deletion of the profile is requested from the electronic device 101 via the communication connection. The external electronic device 1200 may delete the first profile based on the communication signal. The external electronic device 1200 may transmit a HandleNotification to the SM-DP+ server 530, for example, via the ES9+ interface in operation 1229. The HandleNotification may include a result of the profile deletion (e.g., ProfileDeletionResult). Based on information included in the HandleNotification, the SM-DP+ server 530 may identify that the profile with the specific ICCID has been deleted. The SM-DP+ server 530 may transmit an OK message corresponding to the HandleNotification to the electronic device 101 in operation 1231. The SM-DP+ server 530 may transmit the HandleNotification indicating that the profile has been deleted to the BSS/OSS 550, for example, via the ES+2 interface in operation 1233. Based on the HandleNotification, the BSS/OSS 550 may identify that the profile has been deleted. Based on identifying the deletion of the profile, the BSS/OSS 550 may request a new profile from the SM-DP+ server 530, for example, via the ES2+ interface in operation 1235. Although the new profile request may include the deleted ICCID, this is exemplary, and the profile identifier is not limited. The SM-DP+ server 530 may prepare the profile with the corresponding ICCID based on the new profile request. When the profile with the ICCID is completely ready, the SM-DP+ server 530 may transmit the ICCID to the BSS/OSS 550, for example, via the ES2+ interface in operation 1237. The BSS/OSS 550 may transmit a Subscription Status Update to the entitlement server 520 in operation 1239. The Subscription Status Update may be referred to as an active subscription answer, and include, for example, profile information. The entitlement server 520 may transmit a push notification to the electronic device 101 in operation 1241. The push notification may include, for example, the profile information. Based on receiving the push notification, the electronic device 101 may transmit an AquireConfiguration to the entitlement server 520 in operation 1243. The AquireConfiguration may be, for example, but not limited to, a message requesting download information for the profile in operation 1243. The entitlement server 520 may transmit a 200 OK to the electronic device 101 in operation 1245. The 200 OK may include, for example, the download information (e.g., dwonloadinfo=profileAcivationCode=<ActivationCode>), which may be, for example, the download information. In another example, the electronic device 101 may identify the download information in the push notification received in operation 1241, and in this case, operation 1243 and/or operation 1245 may not be performed. In operation 1247, the electronic device 101 may perform an operation for obtaining the profile (e.g., Get Communication profile), for example, via the ES9+ interface. The electronic device 101 may enable the obtained profile in operation 1249. Accordingly, the profile with the specific ICCID may be deleted in the external electronic device 1200, the profile with the specific ICCID may be enabled in the electronic device 101, and the profile (or subscription) with the specific ICCID may be transferred.

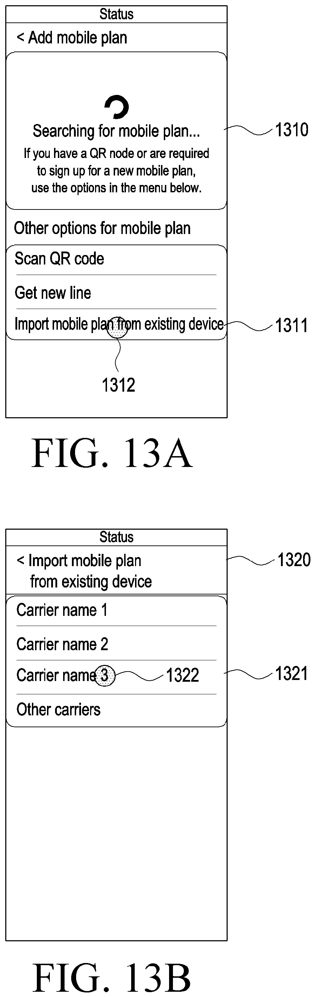

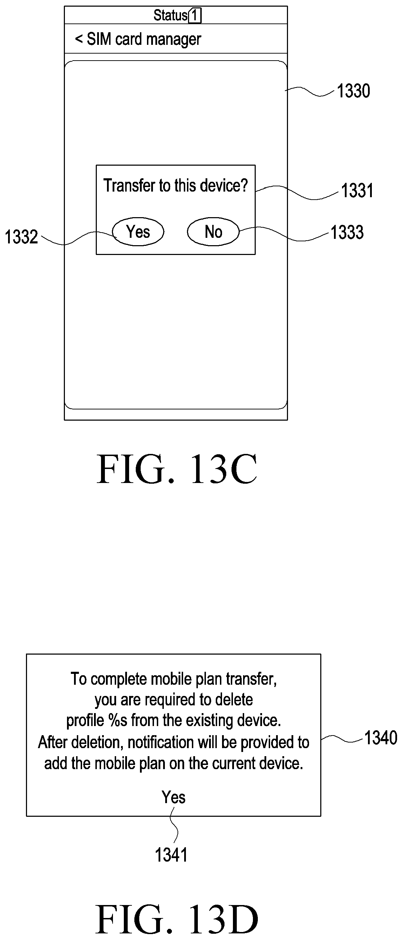

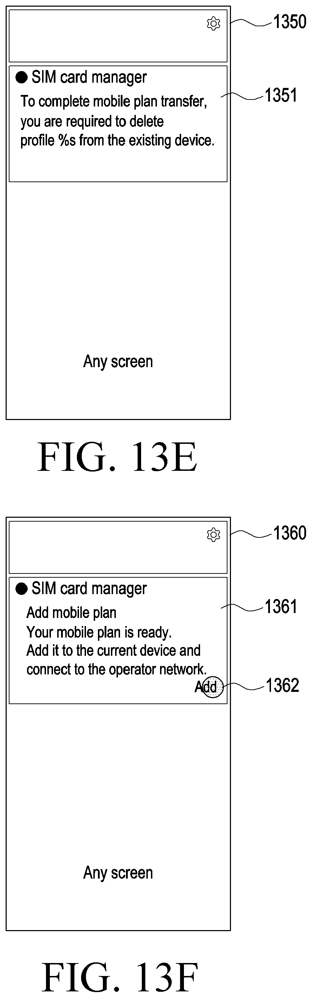

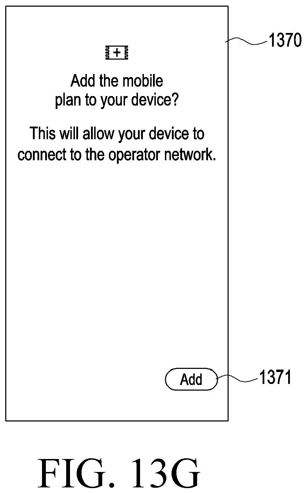

FIG. 13A is a diagram illustrating a screen displayed on an electronic device according to various embodiments. For example, the electronic device 101 may display a screen 1310 including an area 1311 that causes a profile stored in an external electronic device to be transferred to the electronic device 101. When identifying a selection 1312 of the area 1311, the electronic device 101 may display a screen 1320 for selecting a carrier, as illustrated in FIG. 13B. When identifying a selection 1321 of a specific carrier (e.g., Carrier name_3), the electronic device 101 may perform authentication, an eligibility check, and/or a subscription-related action. As described with reference to FIG. 12A, the electronic device 101 may display an operator page from a web server (e.g., the web server 510 in FIG. 5). FIG. 13C is a diagram illustrating a screen displayed on an electronic device according to various embodiments. For example, the electronic device 101 may display a screen 1330 as the operator page from the web server 510. The screen 1330 may include text 1331 inquiring whether to transfer a profile, a button 1332 for confirmation, and a button 1333 for declining. For example, when the button 1333 for declining is selected, the electronic device 101 may stop transferring the profile. For example, when the button 1332 is selected, the electronic device 101 may transmit a message requesting the profile transfer to the entitlement server including the web server 510 (or to the web server 510 when implemented independently). Then, transmission of an activation subscription from the entitlement server 520 to the BSS/OSS (e.g., the BSS/OSS 550), transmission of a new profile request from the BSS/OSS 550 to the SM-DP+ server 530, transmission of a DownloadOrder Specific Status Code from the SM-DP+ server 530 to the BSS/OSS 550, and transmission of a profile deletion request from the BSS/OSS 550 to the entitlement server 520 may be performed, as described above. The entitlement server 520 may transmit a JS callback message indicating that deletion of a profile with a specific ICCID is required to the electronic device 101. The electronic device 101 may display a screen 1340 of FIG. 13D based on receiving the JS callback message. The screen 1340 may include text about deleting the specific profile (e.g., %s) from the existing device and a button 1341 for confirming the deletion. The electronic device 101 may notify an external electronic device that the deletion of the profile is requested based on communication, and in this case, the external electronic device may provide a UI for deleting the profile. When the button 1341 is selected, the electronic device 101 may display a screen 1350 as illustrated in FIG. 13E. The screen 1350 may include text 1351 indicating that the deletion of the profile from the existing electronic device is requested to complete the profile transfer. As described above, the external electronic device 1200 may delete the existing profile. The external electronic device 1200 may notify the SM-DP+ server 530 of the deletion of the specific profile. Subsequently, the electronic device 101 may receive a push notification indicating that the profile is completely ready in the SM-DP+ server 530 from the entitlement server 520, as described with reference to FIG. 12B. Based on receiving the push notification, the electronic device 101 may display a screen 1360 of FIG. 13F, for example. The screen 1360 may include text 1361 indicating that the profile is completely ready and a button 1362 for proceeding to the next step. When the button 1362 is selected, the electronic device 101 may obtain download information, for example, from the entitlement server 520. The electronic device 101 may display a screen 1370 for identifying whether to download the profile as illustrated in FIG. 13G, prior to downloading the profile based on the download information. The screen 1370 may include text inquiring whether to add the profile and a button 1371 for confirming adding the profile. When the button 1371 is selected, the electronic device 101 may perform an operation for obtaining the profile (e.g., Get Communication profile), for example, via the ES9+ interface. The electronic device 101 may download the profile from the SM-DP+ server 530.

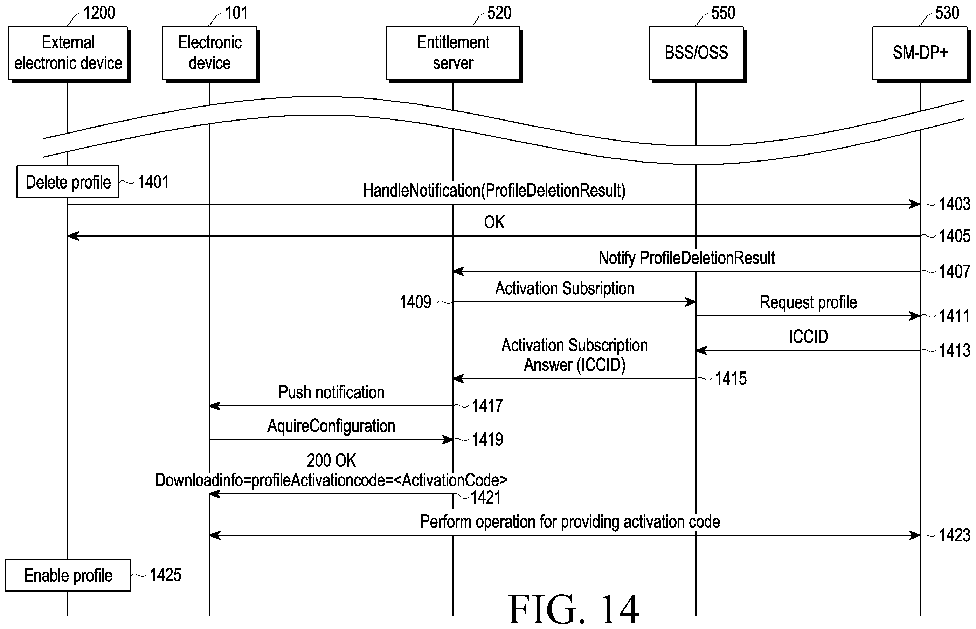

FIG. 14 is a flowchart illustrating a method for operating an electronic device and/or at least one entity of an MNO server may operate according to various embodiments.

According to various embodiments, an external electronic device 1200 may delete a profile in operation 1401. The external electronic device 1200 may transmit a HandleNotification to the SM-DP+ server 530 in operation 1403. The HandleNotification may include information about a result of the profile deletion (e.g., ProfileDeletionResult). The SM-DP+ server 530 may transmit an OK to the electronic device 101 in operation 1405. In contrast to FIG. 12B, in the embodiment of FIG. 14, an interface may be provided between the entitlement server 520 and the SM-DP+ server 530. Accordingly, the SM-DP+ server 530 may transmit a Notify ProfileDeletionResult indicating the result of the profile deletion to the entitlement server 520 in operation 1407. Based on receiving the Notify ProfileDeletionResult, the entitlement server 520 may request an Activation Subscription, for example, a new profile from the BSS/OSS 550 in operation 1409. Based on receiving the Activation Subscription, the BSS/OSS 550 may request the new profile from the SM-DP+ server 530 in operation 1411. The SM-DP+ server 530 may prepare a profile with a corresponding ICCID based on the new profile request. When the profile with the ICCID is completely ready, the SM-DP+ server 530 may transmit the ICCID to the BSS/OSS 550, for example, via the ES2+ interface in operation 1413. The BSS/OSS 550 may transmit a Subscription Status Updated to the entitlement server 520 in operation 1415. The entitlement server 520 may transmit a push notification to the electronic device 101 in operation 1417. The push notification may include, for example, profile information. The electronic device 101 (e.g., the processor 120) may transmit an AquireConfiguration to the entitlement server 520 based on receiving the push notification in operation 1419. The AquireConfiguration may be, for example, but not limited to, a message requesting download information for the profile. The entitlement server 520 may transmit a 200 OK to the electronic device 101 in operation 1421. The 200 OK may include, for example, download information (e.g., dwonloadinfo=profileAcivationCode=<ActivationCode>), which may be, for example, the download information. In operation 1423, the electronic device 101 may perform an operation for obtaining the profile (e.g., Get Communication profile) using the download information, for example, via the ES9+ interface. The electronic device 101 may enable the obtained profile in operation 1425.

FIG. 15 is a flowchart illustrating a method for operating an electronic device and/or at least one entity of an MNO server according to an embodiment.

According to various embodiments, the electronic device 101 (e.g., the processor 120 of FIG. 1) may identify a user input that causes a first profile to be transferred in operation 1501. As described above, for example, the electronic device 101 may provide a UI for causing the profile transfer (or subscription transfer) and receive the user input through the UI, and the implementation of the UI is not limited. Based on the user input, the electronic device 101 may perform an authentication process with the entitlement server 520 in operation 1503. For example, the electronic device 101 may perform EAP-AKA-based authentication, to which the disclosure is not limited. When the authentication process is completed, the electronic device 101 may request CheckEligibility. The request for CheckEligibility may be transmitted through a GET method or a POST method. In operation 1505, the electronic device 101 may request an eligibility check by transmitting a request message including "CheckEligibility" as action information to the entitlement server 520. As described above, although not shown, the entitlement server 520 may transmit a profile query to the BSS/OSS 550. The BSS/OSS 550 may transmit a profile answer corresponding to the profile query to the entitlement server 520. The entitlement server 520 may transmit a 200 OK message to the electronic device 101 in operation 1507. For example, when the eligibility check is completed successfully, the 200 OK message may include information "enabled".

According to various embodiments, the electronic device 101 may transmit a subscription-related action request message to the entitlement server 520 in operation 1509. The subscription-related action request message may include information "ManageSubscription" requesting a subscription-related action in Table 2. The subscription-related action request message may further include identification information (e.g., IMEI or UUID) or authentication token of the electronic device 101. For example, the electronic device 101 may transmit the subscription-related request message including the value of "3-TRANSFER SUBSCRIPTION" among the types in Table 3 to the entitlement server 520. The entitlement server 520 may identify that the profile transfer is requested in operation 1511.

According to various embodiments, the entitlement server 520 may transmit an Activation Subscription message to the BSS/OSS 550, without causing a connection to the web server 510 through a web sheet in operation 1515. For example, the Activation Subscription message may include information (e.g., including, but not limited to, SubscriptionID or PlanID) related to the profile transfer. The BSS/OSS 550 may request a new profile from the SM-DP+ server 530 via the ES2+ interface in operation 1515. Although the new profile request may include an ICCID (e.g., an ICCID in use for the electronic device 101), the profile identifier is not limited. The SM-DP+ server 530 may identify that the ICCID is already in use and thus provide a DownloadOrder Specific Status Code to the BSS/OSS 550. The SM-DP+ server 530 may identify that the ICCID is already in use based on receiving the request for a new profile with the same ICCID, even though the profile has not been deleted after it was provided, for example, as illustrated in FIG. 6. The DownloadOrder Specific Status Code may include, for example, Subject code: 8.2.1, subject: ICCID, Reason code: 3.3, Reason: Already in Use, which may indicate that the profile identified by the provided ICCID is unavailable.

According to various embodiments, the BSS/OSS 550 may identify that deletion of the ICCID is required based on receiving the DownloadOrder Specific Status Code from the SM-DP+ server 530 in operation 1517. For example, the BSS/OSS 550 may identify that the deletion of the ICCID is required based on the ICCID of the profile requested to be transferred is already in use. The BSS/OSS 550 may provide an Activation Subscription Answer to the entitlement server 520 in operation 1519. The Activation Subscription Answer may include information (e.g., "NeedToDelete ICCID") indicating that deletion of the specific ICCID is required. The entitlement server 520 may identify that the deletion of the specific ICCID is required based on the Activation Subscription Answer.

According to various embodiments, the entitlement server 520 may transmit a 200 OK message indicating the deletion of the profile ICCID to the electronic device 101 in operation 1521. The 200 OK message may include information of SubscriptionResult=6-DELETE PROFILE IN USE in Table 4 and/or information (e.g., the ICCID) about the profile to be deleted. As described in Table 4, SubscriptionResult=6-DELETE PROFILE IN USE may indicate that the current profile in use should be deleted for the profile transfer. The electronic device 101 may delete the profile based on the information of SubscriptionResult=6-DELETE PROFILE IN USE included in the received 200 OK in operation 1523. After operation 1523, the profile may be downloaded on the new device substantially in the same manner as in FIG. 8B, and thus its description will be avoided herein. As described above, as the entitlement server 520 uses the information of SubscriptionResult=6-DELETE PROFILE IN USE without causing a connection based on a web sheet to the web server 510, the electronic device 101 may delete the profile without connecting to the web server 510.

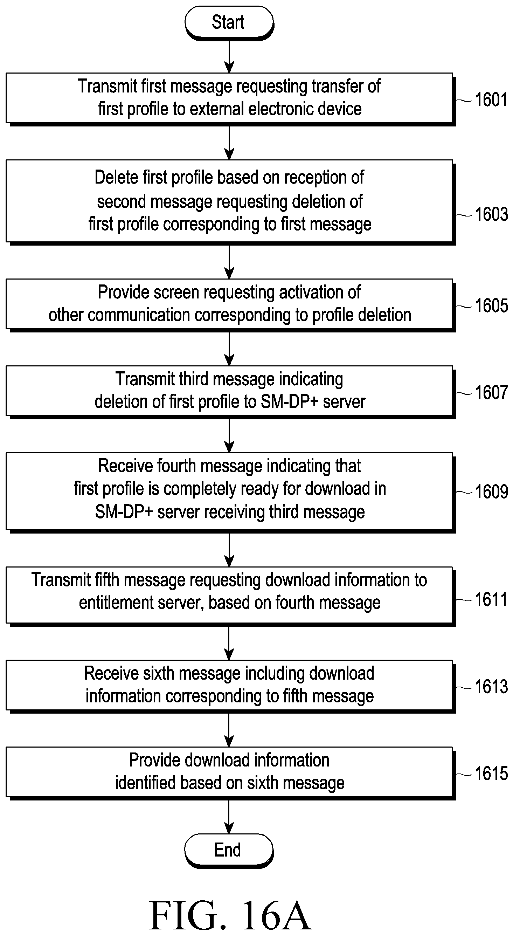

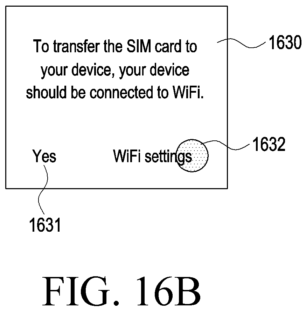

FIG. 16A is a flowchart illustrating a method for operating an electronic device according to various embodiments. The embodiment of FIG. 16A will be described with reference to FIG. 16B. FIG. 16B is a diagram illustrating a screen displayed on the electronic device according to various embodiments.

According to various embodiments, the electronic device 101 (e.g., the processor 120) may transmit a first message requesting transfer of a first profile (or subscription) to an external electronic device based on identifying at least one first user input that causes the transfer of the first profile (or subscription) stored in the eUICC to the external electronic device in operation 1601. The electronic device 101 may delete the first profile based on receiving a second message requesting deletion of the first profile corresponding to the first message from the entitlement server 520 in operation 1603. The second message may be implemented, for example, as a JS callback message as described with reference to FIG. 8A, or as a 200 OK message as described with reference to FIG. 15. However, the implementation of the second message is not limited. The second message may include an ICCID of the profile to be deleted, and the electronic device 101 may delete the first profile corresponding to the ICCID.

According to various embodiments, the electronic device 101 may provide a screen requesting activation of other communication corresponding to the profile deletion in operation 1605. For example, as illustrated in FIG. 16B, the electronic device 101 may display a screen 1630 (or a pop-up window) that includes text indicating that a Wi-Fi connection is required to transfer a SIM card. However, a time when the screen 1630 is displayed is not limited. For example, the screen 1630 may be displayed prior to operation 1601 of FIG. 16A. A button 1631 for confirmation and a button 1632 for moving to Wi-Fi settings may be included in the screen 1630. When identifying that the button 1632 for moving to Wi-Fi settings is selected, the electronic device 101 may provide a screen for the Wi-Fi settings. As described above, a HandleNotification including a result of the profile deletion (e.g., ProfileDeletionResult) may have to be transmitted, for example, as in operation 829 of FIG. 8B, and a Wi-Fi connection may be required. However, this is exemplary and the communication scheme for data communication is not limited. In operation 1607, the electronic device 101 may transmit a third message indicating the deletion of the first profile to the SM-DP+ server 530 based on the newly connected communication (e.g., Wi-Fi). In operation 1609, the electronic device 101 may receive a fourth message indicating that the first profile is completely ready for download in the SM-DP+ server 530 which has received the third message. Based on the fourth message from the entitlement server 520, the electronic device 101 may transmit a fifth message requesting download information to the entitlement server 520 in operation 1611. In response to the fifth message, the entitlement server 520 may provide a sixth message including the download information. The electronic device 101 may receive the sixth message including the download information corresponding to the fifth message in operation 1613. The electronic device 101 may provide the download information identified based on the sixth message in operation 1615. In an example, the electronic device 101 may output the download information or information (e.g., a QR code) from which the download information is identifiable through the display module 160. Alternatively, when the electronic device 101 has established a wired and/or wireless communication connection with the external electronic device, the electronic device 101 may provide the download information via the established communication connection.

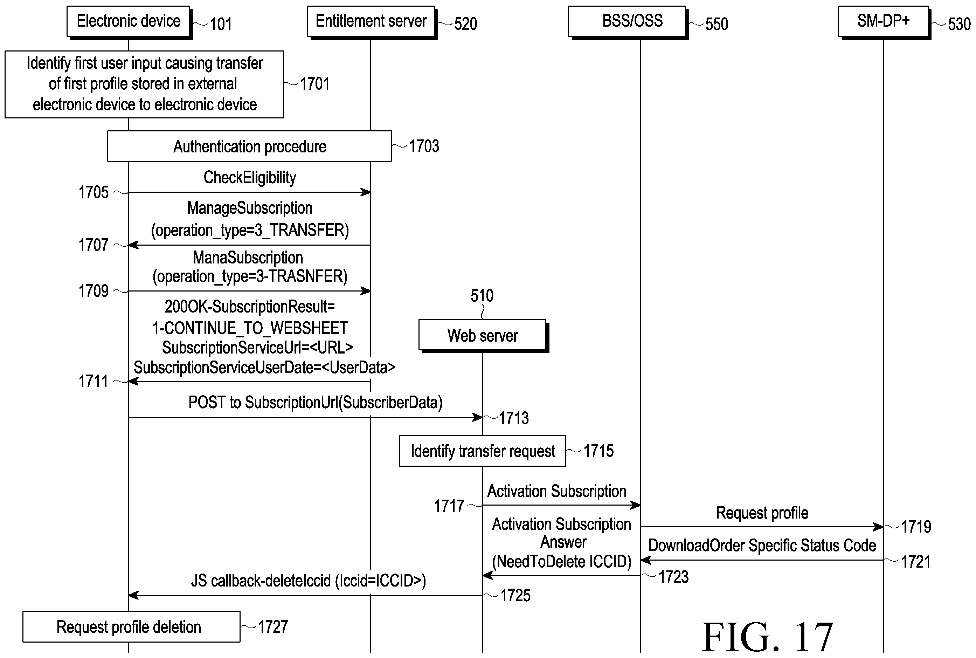

FIG. 17 is a flowchart illustrating a method for operating an electronic device and/or at least one entity of an MNO server according to various embodiments.

According to various embodiments, the electronic device 101 (e.g., the processor 120 of FIG. 1) may identify a user input that causes transfer of a first profile stored in the external electronic device 1200 to the electronic device in operation 1701. For example, it is assumed that the first profile may be stored in the external electronic device 1200, and is not stored in the electronic device 101. For example, the electronic device 101 may provide (e.g., display) a UI indicating "profile transfer from another electronic device to the current electronic device." The electronic device 101 may identify the user input that causes the transfer of the first profile stored in the external electronic device to the electronic device 101, through the UI. According to various embodiments, the electronic device 101 may display an additional UI for selecting one of a plurality of carriers, and obtain an additional user input for selecting a carrier. Based on the user input, the electronic device 101 may perform an authentication process with the entitlement server 520 in operation 1703. The electronic device 101 may perform OPEN ID-based authentication and/or SMS-OTP-based authentication. When the authentication process is completed, the electronic device 101 and/or the entitlement server 520 may identify a user to which the profile (or subscription) is to be transferred, and/or a profile identifier (e.g., ICCID) related thereto.

According to various embodiments, the electronic device 101 may request an eligibility check from the entitlement server 520 in operation 1705. The entitlement server 520 may transmit a 200 OK message to the electronic device 101 in operation 1707. For example, when the eligibility check is completed successfully, the 200 OK message may include information "enabled". In operation 1709, the electronic device 101 may transmit a subscription-related action request message (e.g., a message requesting the profile transfer) to the entitlement server 520 in operation 1707. In response to receiving a subscription response message, the entitlement server 520 may transmit a response message (e.g., a "200 OK" message) to the subscription-related action request (e.g., a "200 OK" message) to the electronic device 101 in operation 1711. For example, the 200 OK message may include "CONTINUE TO WEBSHEET" and include address information (e.g., SubscriptionURL) for accessing the web server (e.g., the web server 510 in FIG. 5) and/or user-related data (e.g., SubscriberData). The electronic device 101 may connect to the web server 510 using the accessible address information (e.g., SubscriptionURL) and/or the user-related data (e.g., UserData) in operation 1713. The electronic device 101 may obtain and provide (e.g., display) an operator web page by connecting to the web server 510. After providing (e.g., displaying) the UI (e.g., the operator web page), the electronic device 101 may identify a user input instructing profile transfer (or subscription transfer). When the identification of the user input is provided to the web server 510, the web server 510 may confirm (or accept) the transfer request in operation 1715. The web server 510 may transmit an Activation Subscription message to the BSS/OSS 550 in operation 1717. The BSS/OSS 550 may request a new profile from the SM-DP+ server 530 via the ES2+ interface in operation 1719. The SM-DP+ server 530 may determine that the ICCID is already in use and thus provide a DownloadOrder Specific Status Code to the BSS/OSS 550 in operation 1721. The SM-DP+ server 530 may identify that the ICCID is already in use based on receiving the request for the new profile with the same ICCID, even though the profile has not been deleted after it was provided, for example, as illustrated in FIG. 6. The BSS/OSS 550 may identify that deletion of the ICCID is required based on receiving the DownloadOrder Specific Status Code from the SM-DP+ server 530. For example, the BSS/OSS 550 may identify that the deletion of the ICCID is required based on the ICCID of the profile requested to be transferred is already in use. The BSS/OSS 550 may provide an Activation Subscription Answer to the entitlement server 520 in operation 1723. The Activation Subscription Answer may include information (e.g., "NeedToDelete ICCID") indicating that deletion of the specific ICCID is required. The entitlement server 520 may identify that the deletion of the specific ICCID is required based on the Activation Subscription Answer. In operation 1725, the entitlement server 520 may transmit a JS callback message indicating that the deletion of the ICCID is required to the electronic device 101. For example, the JS callback message may include information (e.g., "deleteICCID") indicating that the deletion of the ICCID is required and/or the value of the ICCID required to be deleted. Based on the JS callback message, the electronic device 101 may perform an operation related to inducing deletion of the profile with the ICCID in operation 1727. For example, as the action related to causing the deletion of the profile, the electronic device 101 may display a QR code that causes the deletion of the profile. Alternatively, when the electronic device 101 has established a wired and/or wireless communication connection with the external electronic device, the electronic device 101 may provide a request (or command) for the deletion of the profile via the established communication connection. The operations after operation 1727 may be performed substantially in the same manner as in FIG. 12B, for example, and will not be redundantly described herein.

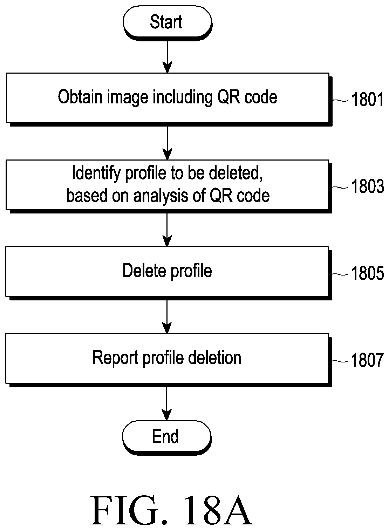

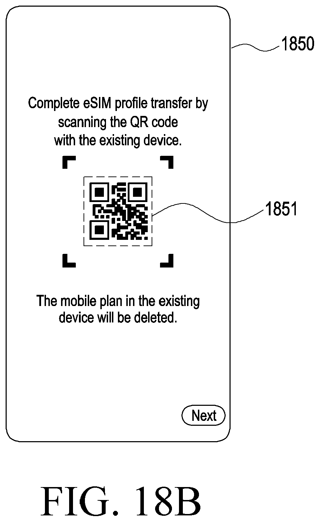

FIG. 18A is a flowchart illustrating a method for operating an external electronic device according to various embodiments. The embodiment of FIG. 18A will be described with reference to FIG. 18B. FIG. 18B is a diagram illustrating a screen displayed on an external electronic device according to various embodiments. The external electronic device 1200 may store a profile required to be transferred, and it is assumed that the electronic device 101 causes the profile to be deleted, for example, in operation 1727 in the same manner as in FIG. 17. For example, referring to FIG. 18B, the electronic device 101 may display a screen 1850 including a QR code 1851. The screen 1850 may include, but is not limited to, text indicating that the QR code is to be scanned and/or that a profile stored in the electronic device 101 will be deleted.

According to various embodiments, the external electronic device 1200 may obtain an image including a QR code in operation 1801. For example, the electronic device 101 may display a QR code that causes deletion of a profile, as in operation 1727 of FIG. 17, and the user of the external electronic device 1200 may capture the QR code displayed on the electronic device 101 using the external electronic device 1200. Accordingly, the external electronic device 1200 may obtain an image including the QR code. The external electronic device 1200 may identify a profile to be deleted based on analysis of the QR code in operation 1803. For example, a result of the analysis of the QR code may include, but is not limited to, the identifier of the profile required to be deleted and/or information indicating that the deletion is required. The external electronic device 1200 may delete the identified profile to be deleted in operation 1805. The external electronic device 1200 may report the deletion of the profile in operation 1807. For example, the external electronic device 1200 may transmit a HandleNotification to the SM-DP+ server 530, for example, via the ES9+ interface, as in operation 1229 of FIG. 12B.

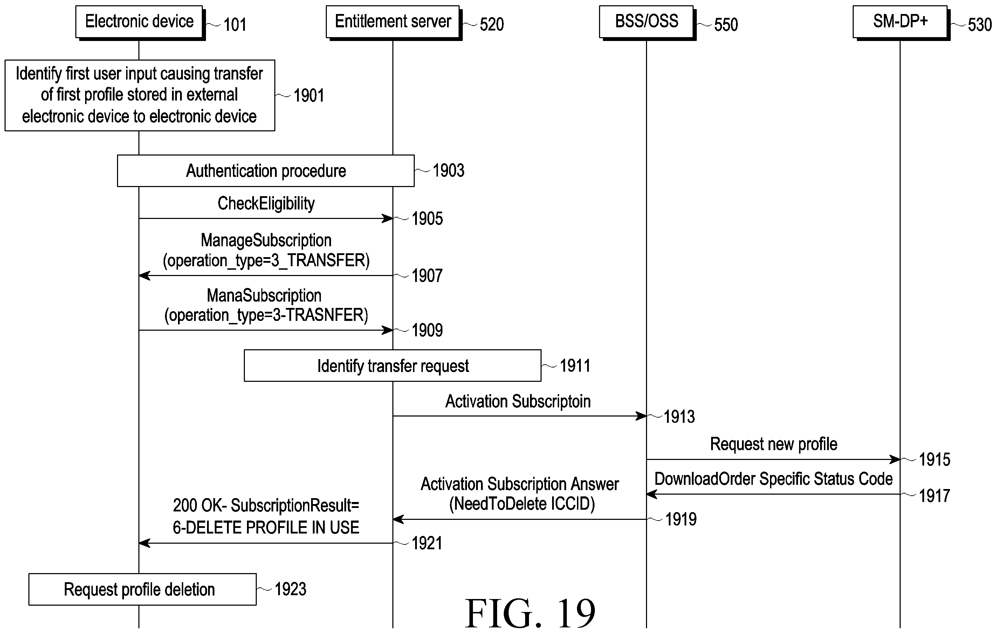

FIG. 19 is a flowchart illustrating a method for operating an electronic device and/or at least one entity of an MNO server according to various embodiments.

According to various embodiments, the electronic device 101 (e.g., the processor 120 of FIG. 1) may identify a user input causing transfer of a first profile stored in the external electronic device 1200 to the electronic device in operation 1901. For example, it is assumed that the external electronic device 1200 may store the first profile, and the electronic device 101 does not store the first profile. For example, the electronic device 101 may provide (e.g., display) a UI indicating "profile transfer from another electronic device to the current electronic device." The electronic device 101 may, via the UI, identify the user input causing transfer of the first profile stored in the external electronic device to the electronic device 101. According to various embodiments, the electronic device 101 may display an additional UI for selecting one of a plurality of carriers, and obtain an additional user input for selecting a carrier. Based on the user input, the electronic device 101 may perform an authentication process with the entitlement server 520 in operation 1903. The electronic device 101 may perform OPEN ID-based authentication and/or SMS-OTP-based authentication. When the authentication process is completed, the electronic device 101 and/or the entitlement server 520 may identify a user to which the profile (or subscription) is to be transferred, and/or a profile identifier (e.g., ICCID) related thereto. The electronic device 101 may request an eligibility check from the entitlement server 520 in operation 1905. The entitlement server 520 may transmit a 200 OK message to the electronic device 101 in operation 1907. For example, when the eligibility check is completed successfully, the 200 OK message may include information "enabled". In operation 1909, the electronic device 101 may transmit a subscription-related action request message to the entitlement server 520.

According to various embodiments, based on the subscription response message, the entitlement server 520 may identify that the profile transfer is requested in operation 1911. The entitlement server 520 may transmit an Activation Subscription message to the BSS/OSS 550 in operation 1913. The BSS/OSS 550 may request a new profile from the SM-DP+ server 530 via the ES2+ interface in operation 1915. The SM-DP+ server 530 may identify that the ICCID is already in use, and thus provide a DownloadOrder Specific Status Code to the BSS/OSS 550 in operation 1917. The SM-DP+ server 530 may identify that the ICCID is already in use based on receiving the request for the new profile with the same ICCID, even though the profile has not been deleted after it was provided, for example, as illustrated in FIG. 6. The BSS/OSS 550 may identify that deletion of the ICCID is required based on receiving a DownloadOrder Specific Status Code from the SM-DP+ server 530. For example, the BSS/OSS 550 may identify that the deletion of the ICCID is required based on the ICCID of the profile requested to be transferred being already in use. The BSS/OSS 550 may provide an Activation Subscription Answer to the entitlement Server 520 in operation 1919. The Activation Subscription Answer may include information (e.g., "NeedToDelete ICCID") indicating that the deletion of the specific ICCID is required.

According to various embodiments, the entitlement server 520 may transmit a 200 OK message instructing the deletion of the ICCID to the electronic device 101 in operation 1921. The 200 OK message may include information of SubscriptionResult=6-DELETE PROFILE IN USE in Table 4. As described in Table 4, SubscriptionResult=6-DELETE PROFILE IN USE may indicate that the profile in use should be deleted for the profile transfer. Based on the information of SubscriptionResult=6-DELETE PROFILE IN USE included in the received 200 OK, the electronic device 101 may request the deletion of the profile in operation 1923. For example, the electronic device 101 may display a QR code that causes the profile to be deleted as illustrated in FIG. 18B, to which the disclosure is not limited. After operation 1923, the profile may be downloaded in the new device in the same manner as in FIG. 12B, and thus, its description will be avoided herein. As described above, as the entitlement server 520 uses the information of SubscriptionResult=6-DELETE PROFILE IN USE without causing a web sheet-based connection to the web server 510, the electronic device 101 may transfer the profile without connecting to the web server 510.

According to various embodiments, an electronic device may include an eUICC (e.g., the eSIM 201) and at least one processor (e.g., the processor 120) electrically connected to the eUICC, and the at least one processor may be configured to, based on identifying at least one user input causing transfer of a first profile stored in the eUICC to an external electronic device, transmit a first message requesting the transfer of the first profile to the external electronic device, delete the first profile based on receiving a second message requesting deletion of the first profile corresponding to the first message, transmit a third message indicating the deletion of the first profile to an SM-DP+ server, receive, from an entitlement server, a fourth message indicating that the first profile is completely ready in the SM-DP+ server receiving the third message, transmit a fifth message requesting profile download information to the entitlement server, based on the fourth message, receive a sixth message including the download information corresponding to the fifth message from the entitlement server, and provide the download information identified based on the sixth message.

According to various embodiments, the at least one processor may be further configured to perform extensible authentication protocol-authentication and key agreement (EAP-AKA)-based authentication with the entitlement server.

According to various embodiments, the at least one processor may be further configured to perform an eligibility check (CheckEligibility) with the entitlement server, based on completion of the authentication.

According to various embodiments, the at least one processor may be further configured to transmit a subscription-related action request message to the entitlement server, based on completion of the eligibility check, wherein the subscription-related action request message includes information for profile transfer, and receive a response message corresponding to the subscription-related action request message, including accessible address information and/or user-related data.

According to various embodiments, the at least one processor may be further configured to obtain information which may provide a UI, based on the accessible address information and/or the user-related data included in the response message, and provide the UI, and at least some of the at least one user input may be obtained through the UI.

According to various embodiments, the electronic device may further include a display module, and the at least one processor may be configured to control the display module to display a QR code for obtaining the download information, as at least part of providing the download information.

According to various embodiments, the at least one processor may be further configured to receive the second message based on a JS callback message, requesting the deletion of the first profile.

According to various embodiments, the at least one processor may be further configured to receive the second message based on a 200 OK message, requesting the deletion of the first profile, and the second message may include information of SubscriptionResult=6-DELETE PROFILE IN USE.

According to various embodiments, the at least one processor may be further configured to provide information indicating that another communication connection is required, based on the deletion of the first profile.

According to various embodiments, a method for operating a server may include receiving a first message requesting a new profile with a specific ICCID from an entitlement server, transmitting a second message requesting the new profile with the specific ICCID to an SM-DP+ server, based on the reception of the first message, receiving a third message indicating that the specific ICCID is in use from the SM-DP+ server, after transmitting the second message, and transmitting a fourth message requesting deletion of the profile with the specific ICCID to the entitlement server, based on the reception of the third message.

According to various embodiments, the method may further include identifying that transfer of the profile with the specific ICCID is requested, based on the first message, and based on identifying that the transfer of the profile with the specific ICCID is requested, identifying that the deletion of the profile with the specific ICCID is requested, based on the third message.

According to various embodiments, the method may further include receiving a fifth message indicating the deletion of the profile with the specific ICCID from the SM-DP+ server, after transmitting the fourth message, and transmitting a sixth message requesting the profile with the specific ICCID to the SM-DP+ server, based on the reception of the fifth message.

According to various embodiments, the method may further include receiving a seventh message indicating that the profile with the specific ICCID is completely ready from the SM-DP+ server, after transmitting the sixth message, and transmitting an eighth message including profile information about the profile with the specific ICCID to the entitlement server, based on the reception of the seventh message.

According to various embodiments, the fourth message requesting the deletion of the profile with the specific ICCID is based on a JS callback message.

According to various embodiments, the fourth message requesting the deletion of the profile with the specific ICCID may be based on an 200 OK message, and includes information of SubscriptionResult=6-DELETE PROFILE IN USE.

According to various embodiments, a method for operating an entitlement server may include receiving a first message requesting transfer of a profile from an electronic device, transmitting a second message requesting a new profile with a specific ICCID to a BSS/OSS, based on the first message, receiving a third message indicating that deletion of the profile with the specific ICCID is requested, and transmitting a fourth message indicating that the deletion of the profile with the specific ICCID is requested to the electronic device, based on the reception of the third message.

According to various embodiments, the third message may be received from the BSS/OSS.

According to various embodiments, the third message may be received from an SM-DP+ server communicating with the BSS/OSS via an interface between the SM-DP+ server and the entitlement server.

According to various embodiments, the method may further include receiving a fifth message indicating that the profile with the specific ICCID is completely ready from the BSS/OSS after transmitting the fourth message, transmitting a sixth message indicating that the profile with the specific ICCID is completely ready to the electronic device, based on the reception of the fifth message, receiving a seventh message requesting download information for the profile with the specific ICCID from the electronic device, after transmitting the sixth message, and transmitting an eighth message including the download information for the profile with the specific ICCID to the electronic device, based on the reception of the seventh message.

According to various embodiments, an electronic device may include an eUICC and at least one processor electrically connected to the eUICC. The at least one processor may be configured to, based on identifying at least one user input causing transfer of a first profile stored in an external electronic device to the electronic device, transmit a first message requesting the transfer of the first profile to the electronic device, based on receiving a second message requesting deletion of the first profile corresponding to the first message, perform an operation related to inducing the deletion of the first profile, receive a third message indicating that the first profile is completely ready in an SM-DP+ server from an entitlement server, transmit a fourth message requesting download information to the entitlement server, based on the third message, receive a fifth message including the download information corresponding to the fourth message from the entitlement server, obtain the first profile from the SM-SP+ server, based on the download information identified based on the fifth message, install the first profile in the eUICC, and enable the first profile.

According to various embodiments, the at least one processor may be further configured to OPEN-ID-based authentication and/or SMS OTP-based authentication with the entitlement server.

According to various embodiments, the at least one processor may be further configured to perform an eligibility check (CheckEligibility) with the entitlement server, based on completion of the authentication.

According to various embodiments, the at least one processor may be further configured to transmit a subscription-related action request message to the entitlement server, based on completion of the eligibility check, wherein the subscription-related action request message includes information for profile transfer, and receive a response message corresponding to the subscription-related action request message, including accessible address information and/or user-related data.

According to various embodiments, the at least one processor may be further configured to obtain information which may display a QR code causing the deletion of the first profile as at least part of performing the operation related to inducing the deletion of the first profile.

According to various embodiments, the at least one processor may be further configured to provide a UI, based on the accessible address information and/or the user-related data included in the response message, and provide the UI, and at least some of the at least one user input may be obtained through the UI.

According to various embodiments, the electronic device may further include a display module, and the at least one processor may be configured to control the display module to display information indicating that the deletion of the first profile in the external electronic device is required, as at least part of performing the operation related to inducing the deletion of the first profile.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
an embedded universal integrated circuit card (eUICC); and
at least one processor electrically connected to the eUICC,
wherein the at least one processor is configured to:
based on identifying at least one user input causing transfer of a first profile stored in the eUICC to an external electronic device, transmit a first message requesting the transfer of the first profile to the external electronic device,
based on receiving a second message requesting deletion of the first profile corresponding to the first message, delete the first profile,
transmit a third message indicating the deletion of the first profile to an SM-DP+ server,
receive, from an entitlement server, a fourth message indicating that the first profile is completely ready in the SM-DP+ server receiving the third message,
transmit a fifth message requesting profile download information to the entitlement server, based on the fourth message,
receive a sixth message including the download information corresponding to the fifth message from the entitlement server, and
provide the download information identified based on the sixth message.

2. The electronic device of claim 1, further comprising a display module,
wherein the at least one processor is configured to control the display module to display a QR code for obtaining the download information, as at least part of providing the download information.

3. The electronic device of claim 1, wherein the at least one processor is further configured to receive the second message based on a JS callback message, requesting the deletion of the first profile.

4. The electronic device of claim 1, wherein the at least one processor is further configured to receive the second message based on a 200 OK message, requesting the deletion of the first profile, and
wherein the second message includes information of SubscriptionResult=6-DELETE PROFILE IN USE.

5. The electronic device of claim 1, wherein the at least one processor is further configured to provide information indicating that another communication connection is required, based on the deletion of the first profile.

6. A method for operating a server, comprising:
receiving a first message requesting a new profile with a specific ICCID from an entitlement server;
transmitting a second message requesting the new profile with the specific ICCID to an SM-DP+ server, based on the reception of the first message;
after transmitting the second message, receiving a third message indicating that the specific ICCID is in use from the SM-DP+ server; and
transmitting a fourth message requesting deletion of the profile with the specific ICCID to the entitlement server, based on the reception of the third message.

7. The method of claim 6, further comprising:
identifying that transfer of the profile with the specific ICCID is requested, based on the first message; and
based on identifying that the transfer of the profile with the specific ICCID is requested, identifying that the deletion of the profile with the specific ICCID is requested, based on the third message.

8. The method of claim 6, further comprising:
after transmitting the fourth message, receiving a fifth message indicating the deletion of the profile with the specific ICCID from the SM-DP+ server; and
transmitting a sixth message requesting the profile with the specific ICCID to the SM-DP+ server, based on the reception of the fifth message.

9. The method of claim 8, further comprising:
after transmitting the sixth message, receiving a seventh message indicating that the profile with the specific ICCID is completely ready from the SM-DP+ server; and
transmitting an eighth message including profile information about the profile with the specific ICCID to the entitlement server, based on the reception of the seventh message.

10. The method of claim 6, wherein the fourth message requesting the deletion of the profile with the specific ICCID is based on a JS callback message.

11. The method of claim 6, wherein the fourth message requesting the deletion of the profile with the specific ICCID is based on an 200 OK message, and the fourth message includes information of SubscriptionResult=6-DELETE PROFILE IN USE.

12. A method for operating an entitlement server, comprising:
receiving a first message requesting transfer of a profile from an electronic device;
transmitting a second message requesting a new profile with a specific ICCID to a BSS/OSS, based on the first message;
receiving a third message indicating that deletion of the profile with the specific ICCID is requested; and
transmitting a fourth message indicating that the deletion of the profile with the specific ICCID is requested to the electronic device, based on the reception of the third message.

13. The method of claim 12, wherein the third message is received from the BSS/OSS.

14. The method of claim 12, wherein the third message is received from an SM-DP+ server communicating with the BSS/OSS via an interface between the SM-DP+ server and the entitlement server.

15. The method of claim 12, further comprising:
after transmitting the fourth message, receiving a fifth message indicating that the profile with the specific ICCID is completely ready from the BSS/OSS;
transmitting a sixth message indicating that the profile with the specific ICCID is completely ready to the electronic device, based on the reception of the fifth message;
after transmitting the sixth message, receiving a seventh message requesting download information for the profile with the specific ICCID from the electronic device; and
transmitting an eighth message including the download information for the profile with the specific ICCID to the electronic device, based on the reception of the seventh message.
